# EUROPÄISCHE PATENTSCHRIFT

(11) **EP 4 167 429 B1**
(45) Veröffentlichungstag und Bekanntmachung des Hinweises auf die Patenterteilung: **12.08.2026**
(21) Anmeldenummer: 22201996.0
(22) Anmeldetag: 17.10.2022
(51) Int. Cl.: H02J 7/62, H02J 7/60

(54) **ENERGIESPEICHERVORRICHTUNG, ENERGIESPEICHERSYSTEM MIT DERSELBEN UND STEUERVERFAHREN, VORAUFLADESCHALTUNG FÜR EINE ENERGIESPEICHERVORRICHTUNG**
ENERGY STORAGE DEVICE, ENERGY STORAGE SYSTEM COMPRISING SAME AND CONTROL METHOD, PRE-CHARGING CIRCUIT FOR AN ENERGY STORAGE DEVICE
DISPOSITIF DE STOCKAGE D'ÉNERGIE, SYSTÈME DE STOCKAGE D'ÉNERGIE LE COMPRENANT ET PROCÉDÉ DE COMMANDE, CIRCUIT DE PRÉCHARGE POUR DISPOSITIF DE STOCKAGE D'ÉNERGIE

(30) Priorität: 15.10.2021 DE 102021126882
(43) Veröffentlichungstag der Anmeldung: 19.04.2023
(73) Patentinhaber: Torqeedo GmbH, 82234 Wessling (DE)
(72) Erfinder: Biebach, Jens, 82205 Gilching (DE)
(74) Vertreter: Nordmeyer, Philipp Werner

(56) Entgegenhaltungen:
- CN-A- 111 434 509
- US-A1- 2012 139 479
- US-A1- 2017 047 758

## Beschreibung

### Technisches Gebiet

Die vorliegende Offenbarung betrifft eine Energiespeichervorrichtung für ein Wasserfahrzeug und ein Energiespeichersystem für ein Wasserfahrzeug mit zumindest zwei derartigen Energiespeichervorrichtungen, die in Parallelschaltung miteinander verbunden sind. Die Offenbarung betrifft ferner ein Lade-Steuerverfahren für die Energiespeichervorrichtung und/oder für das Energiespeichersystem und eine Steuereinheit.

### Stand der Technik

Elektrische Energiespeichervorrichtungen, beispielsweise Batterien, werden unter anderem für die elektrische Versorgung einer Last verwendet. Die Last kann beispielsweise ein Antriebs-Elektromotor eines Wasserfahrzeuges, wie ein Boot, ein Schiff oder eine Fähre, sein. Batterien, insbesondere Lithium-Ionen-basierte Batterien, verfügen für gewöhnlich aus Gründen der Sicherheit über einen integrierten Hauptschalter, der zumindest den aus der Batterie herausfließenden Strom, insbesondere einen Entladestrom, unterbrechen kann. Weiterhin können Batterien auch initial oder zum Anschalten einer Batteriebank, die mehrere Batterien aufweist, miteinander verbunden werden, um eine eingeschaltete Batteriebank auszubilden.

Wird eine Batterie mit einer Last, die eine Spannungsquelleneigenschaft aufweist, beispielsweise ein Kondensator, verbunden, dann fließt im Falle von unterschiedlichen Spannungshöhen von Batterie und Last beim Schließen des Hauptschalters ein hoher Ausgleichsstrom, der den Hauptschalter und weitere Schaltungsbauteile der Batterie beschädigen kann. Es ist daher erwünscht, die Spannungshöhen von Batterie und Last vor dem Schließen des Hauptschalters aneinander anzupassen oder zu adaptieren. Dafür wird üblicherweise eine Voraufladeschaltung verwendet.

Einfache Voraufladeschaltungen umfassen oder bestehen lediglich aus einem geschalteten Widerstand. Hier variiert der Voraufladestrom sehr stark als Funktion der Spannung an den Anschlüssen der Batterie bzw. der Lastspannung. Es kann abhängig von der Kapazität der Last zu sehr großen Verlustleistungspulsen im Widerstand kommen, weshalb die Auslegung des Widerstandes für variierende Kapazitätswerte problematisch ist. Hat die Last nicht nur kapazitive, sondern auch ohmsche Bestandteile, ist es aufgrund der Spannungsteilung zwischen dem Widerstand der Voraufladeschaltung und dem der Last beim Voraufladen häufig nicht möglich, eine Spannungshöhe an der Last zu erreichen, bei dem ein Schließen des Hauptschalters problemfrei möglich ist.

Werden zwei gleiche Batterien mit unterschiedlichen Ladungszuständen ("State of Charge", kurz "SOC") und damit unterschiedlichen Spannungshöhen parallel miteinander verbunden, um eine Batteriebank auszubilden, findet ein Ausgleich des Energieinhalts zwischen den Batterien durch einen Ausgleichstrom von der Batterie höherer Spannung zur Batterie niedrigerer Spannung statt. Nach dem Kirchhoffschen Gesetz muss dabei der aus der Batterie mit der höheren Spannung bzw. dem höheren Ladungszustand hinausfließende Strom gleich dem Strom sein, der in die Batterie mit der niedrigeren Spannung bzw. dem niedrigeren Ladungszustand hineinfließt. Beim Zusammenschalten von mehreren gleichen Batterien zu einer Batteriebank muss eine Voraufladeschaltung daher in der Lage sein, unterschiedliche Ladungszustände der Batterien weitestgehend verlustleistungsfrei in kurzer Zeit auszugleichen. Das Ausgleichen des Energieinhaltes von Batterien in ausreichend kurzer Zeit erfordert einen Ausgleichsstrom von geeigneter und damit ausreichender Höhe. Gleichzeitig hat eine Schaltung mit einem strombegrenzenden Widerstand einen schlechten Wirkungsgrad.

Externe Ladevorrichtungen, auch Charger genannt, für derartige Batterien haben typischerweise eine sogenannte CCCV ("Constant Current, Constant Voltage")-Ladecharakteristik bzw. führen ein CCCV-Ladeverfahren durch. In einer Konstantstromphase erfolgt das Laden bei einem konstanten Ladestrom, der von der externen Ladevorrichtung begrenzt wird. Daran schließt sich eine Konstantspannungsphase an, in der das Laden bei einer konstanten Spannung erfolgt, die von der externen Ladevorrichtung bereitgestellt wird. Der Übergang von der Konstantstromphase in die Konstantspannungsphase erfolgt, wenn die Batteriespannung eine vorgegebene Ladeschlussspannung erreicht. Die Batteriespannung wird von der externen Ladevorrichtung überwacht. In der Konstantspannungsphase sinkt der Ladestrom langsam ab und das Laden wird beendet, wenn der Ladestrom einen Schwellwert unterschritten hat. Damit es zu keiner kritischen Überladung und somit Schädigung der Batterie kommt, ist die externe Ladevorrichtung typischerweise mit einer negativen Toleranz ausgestattet. Dies bedeutet, dass die externe Ladevorrichtung bereits dann in die Konstantspannungsphase wechselt, wenn die Batteriespannung einen Wert erreicht, der unterhalb der eigentlichen Ladeschlussspannung der Batterie liegt. Diese Toleranz variiert zwischen Ladevorrichtungen. Dies führt dazu, dass die Batterien im Normalfall einen SOC (kurz für "State of Charge", deutsch "Ladezustand") von 100 % nicht erreichen. Dies wiederum erschwert die Rekalibrierung der SOC-Messung. Des Weiteren kann es bei umfangreichen Installationen mit langen Kabeln und gestaffelter Absicherung dazu kommen, dass sich die Konstantspannungsphase durch die vergrößerten Zuleitungswiderstände erheblich verlängert und innerhalb einer akzeptablen Ladezeit kein befriedigender SOC erreicht werden kann.

So zeigt die US 2017/0047758 A1 ein DC-Spannungsversorgungssystem, das dazu eingerichtet ist, einen Glättungskondensator vorzuladen, bevor eine Last versorgt wird und die CN 111434509 A eine integrierte Lade- und Entladelösung für Gleichstromseitenkondensatoren eines Gleichrichters. Die US 2012/0139479 A1 zeigt eine Ladesteuerungssystem eines Batteriepacks.

### Darstellung der Erfindung

Ausgehend vom bekannten Stand der Technik ist es eine Aufgabe der vorliegenden Erfindung, eine Energiespeichervorrichtung anzugeben, die die genannten Probleme des Stands der Technik beseitigt. Es ist eine Aufgabe der vorliegenden Erfindung, eine Energiespeichervorrichtung bereitzustellen, die einfach, sicher und kostengünstig realisiert werden kann.

Es ist insbesondere eine Aufgabe der vorliegenden Offenbarung, eine Energiespeichervorrichtung anzugeben, mit der auf einfache, sichere und kostengünstige Weise Ausgleichsströme beim Parallelschalten von mehreren Energiespeichervorrichtungen in einem Energiespeichersystem begrenzt werden können und ein sicheres Voraufladen der Energiespeichervorrichtungen, aber auch von Lasten und Verbrauchern, ermöglicht wird.

Es ist ferner eine Aufgabe der vorliegenden Erfindung, eine Energiespeichervorrichtung mit einer verbesserten Lademöglichkeit bereitzustellen. Es ist eine Aufgabe der vorliegenden Erfindung, eine Energiespeichervorrichtung bereitzustellen, die sowohl sicher als auch schnell geladen werden kann. Es ist insbesondere eine Aufgabe der vorliegenden Erfindung, eine Energiespeichervorrichtung bereitzustellen, mit der auf einfache, schnelle, sichere und kostengünstige Weise ein Laden derselben bis zu einem SOC von im Wesentlichen 100 % möglich ist.

Es ist schließlich eine Aufgabe der vorliegenden Erfindung, ein Energiespeichersystem mit einer solchen Energiespeichervorrichtung sowie ein Lade-Steuerverfahren zum Steuern einer solchen Energiespeichervorrichtung und eines solchen Energiespeichersystems anzugeben.

Die Aufgaben werden durch den Gegenstand der unabhängigen Ansprüche gelöst. Vorteilhafte Weiterbildungen ergeben sich aus den entsprechenden Unteransprüchen, der Beschreibung und den Figuren.

Die Erfindung ist im beigefügten Anspruchssatz beschrieben.

Die vorliegende Offenbarung beruht auf dem Gedanken, eine Voraufladeschaltung für eine Energiespeichervorrichtung, beispielsweise eine Batterie, mit einer Energiespeichereinheit, beispielsweise zumindest einem Batteriemodul bereitzustellen. Somit kann die Energiespeichervorrichtung eingerichtet sein, mittels der Voraufladeschaltung die Stromstärke eines Entladestroms für die Energiespeichereinheit auf einen vorgegebenen Entladestrom-Schwellwert zu begrenzen. Die Voraufladeschaltung kann somit in dieser Hinsicht den Charakter einer (Konstant)-Stromquelle aufweisen. Dadurch ist ein Ausgleichsstrom zwischen in Parallelschaltung miteinander verbundenen Energiespeichervorrichtungen möglich, der weitgehend unabhängig vom Ladungszustand der Batterien ist. Die Voraufladeschaltung ist vorzugsweise als geregelte, getaktete (Konstant)-Stromquelle ausgestaltet, dadurch können ohmsche Verluste minimiert werden.

Andererseits kann die Energiespeichervorrichtung eingerichtet sein, die Stromstärke eines Ladestroms, also einem Strom mit entgegengesetzter Richtung zum Entladestrom, für die Energiespeichereinheit nicht zu begrenzen oder die Energiespeichervorrichtung weist für die Stromstärke des Ladestroms einen deutlich höheren Ladestrom-Schwellwert, auch Stromgrenze genannt, als für den Entladestrom auf. Die Voraufladeschaltung weist somit in dieser Hinsicht den Charakter einer (Konstant)-Spannungsquelle auf.

In einem Energiespeichersystem, beispielsweise in einem Batteriesystem oder in einer Batteriebank, mit zumindest zwei in Parallelschaltung miteinander verbundenen Energiespeichervorrichtungen kann damit beim Ausgleich der Energieinhalte die Energiespeichereinheit mit dem höheren Ladungszustand und damit mit der höheren Spannung im Entladestrom begrenzt werden, während die Energiespeichereinheit mit dem niedrigeren Ladungszustand und damit mit der niedrigeren Spannung im Ladestrom nicht begrenzt wird. Die Voraufladeschaltung kann auch als Ausgleichsschaltung bezeichnet werden. Dementsprechend können die hier offenbarten Vorauflade-(Steuer-)Verfahren als Ausgleichs-(Steuer-)Verfahren bezeichnet werden.

Mit der Voraufladeschaltung gemäß der vorliegenden Offenbarung wird auch der Tatsache Rechnung getragen, dass die Hauptanwendung der Energiespeichereinheit darin besteht, eine damit verbundene elektrische Last zu versorgen, die selbst keine Energiespeichereinheit ist. Ferner ist die Voraufladeschaltung eingerichtet, um in Abhängigkeit von der Richtung des fließenden Stromes von bzw. zu der Energiespeichereinheit und/oder vom Verhältnis der Spannung an der Energiespeichereinheit zur Spannung an den äußeren Anschlüssen der Energiespeichervorrichtung den Charakter von einer Stromquelle zu einer Spannungsquelle oder umgekehrt zu ändern.

Da die Energiespeichereinheiten der Energiespeichervorrichtungen, die zusammengeschaltet werden sollen, sowohl über eine höhere (bzw. zu hohe) Spannung gegenüber den anderen Energiespeichereinheiten als auch über eine niedrigere (bzw. zu niedrige) Spannung gegenüber den anderen Energiespeichereinheiten verfügen können, kann die Voraufladeschaltung situationsgerecht über den jeweils richtigen Charakter verfügen. Hat beispielsweise die jeweilige Energiespeichereinheit eine höhere Spannung als die anderen Energiespeichereinheiten im Energiespeichersystem, kann der Stromquellencharakter wirksam werden, und hat die Energiespeichereinheit eine niedrigere Spannung kann der Spannungsquellencharakter bzw. der Charakter einer Stromquelle mit einer deutlich höheren Stromgrenze wirksam werden.

Gemäß einem ersten Aspekt der vorliegenden Offenbarung ist eine Energiespeichervorrichtung für ein Wasserfahrzeug angegeben, die Energiespeichervorrichtung umfassend: einen ersten Anschluss, auch als Terminal bezeichnet, und einen zweiten Anschluss, und eine Energiespeichereinheit mit einem ersten Pol und einem zweiten Pol, wobei der erste Pol mit dem ersten Anschluss und der zweite Pol mit dem zweiten Anschluss verbunden ist.

Die Energiespeichervorrichtung umfasst ferner eine Voraufladeschaltung und eine Steuereinheit. Die Steuereinheit ist eingerichtet, die Voraufladeschaltung zu steuern, um die Stärke eines Entladestroms für die Energiespeichereinheit auf einen vorgegebenen Entladestrom-Schwellwert zu begrenzen. Auf den "Entladestrom-Schwellwert begrenzen" bedeutet hier, dass die Stärke des Entladestroms gleich oder kleiner als der Entladestrom-Schwellwert ist oder bleibt oder den Entladestrom-Schwellwert nicht überschreitet. Insbesondere kann die Steuereinheit eingerichtet sein, die Voraufladeschaltung derart zu steuern, dass ein Maximalwert der Stromstärke des Entladestroms oder ein zeitlicher Mittelwert der Stromstärke gleich oder kleiner als der vorgegebene Entladestrom-Schwellwert ist oder den Entladestrom-Schwellwert nicht überschreitet.

Die Energiespeichervorrichtung kann ferner eingerichtet sein, um die Stärke eines Ladestroms für die Energiespeichereinheit nicht zu begrenzen oder um die Stärke des Ladestroms auf einen Ladestrom-Schwellwert zu begrenzen, der größer ist als der Entladestrom-Schwellwert.

Gemäß einem zweiten Aspekt der vorliegenden Offenbarung ist eine Energiespeichervorrichtung für ein Wasserfahrzeug angegeben, die Energiespeichervorrichtung umfassend: einen ersten Anschluss und einen zweiten Anschluss, eine Energiespeichereinheit mit einem ersten Pol und einem zweiten Pol, eine erste Verbindungsleitung zwischen dem ersten Pol und dem ersten Anschluss und eine zweite Verbindungsleitung zwischen dem zweiten Pol und dem zweiten Anschluss.

Der erste Pol ist also mittels der ersten Verbindungsleitung mit dem ersten Anschluss verbunden und der zweite Pol ist mittels der zweiten Verbindungsleitung mit dem zweiten Anschluss verbunden. Die erste Verbindungsleitung weist einen ersten Knoten, der mit dem ersten Pol verbunden ist, und einen zweiten Knoten auf, der mit dem ersten Anschluss verbunden ist. Die zweite Verbindungsleitung weist einen vierten Knoten auf, der mit dem zweiten Pol und dem zweiten Anschluss verbunden ist.

Die Energiespeichervorrichtung umfasst ferner eine erste Schalteinheit, die in der ersten Verbindungsleitung zwischen dem ersten Knoten und dem zweiten Knoten angeordnet ist und die zum Schalten eines Stroms vom ersten Knoten zum zweiten Knoten eingerichtet ist. Die erste Schalteinheit kann auch als erster Hauptschalter bezeichnet werden.

Die Energiespeichervorrichtung umfasst ferner eine Voraufladeschaltung. Die Voraufladeschaltung umfasst eine dritte Verbindungsleitung zwischen dem ersten Knoten und dem zweiten Knoten mit einem dritten Knoten und einer Induktivität zwischen dem dritten Knoten und dem zweiten Knoten, eine vierte Verbindungsleitung zwischen dem dritten Knoten und dem vierten Knoten, und eine Freilaufdiode, die in der vierten Verbindungsleitung angeordnet ist und für einen Strom vom vierten Knoten zum dritten Knoten in Durchlassrichtung angeordnet ist. Demnach umfasst die dritte Verbindungsleitung ein erstes Ende, das mit dem ersten Knoten verbunden oder verbindbar ist, und ein zweites Ende, das mit dem zweiten Knoten verbunden ist oder verbindbar ist. Der dritte Knoten ist also zwischen dem ersten Ende und dem zweiten Ende der dritten Verbindungsleitung angeordnet und die Induktivität ist zwischen dem dritten Knoten und dem zweiten Ende der dritten Verbindungsleitung angeordnet. Die vierte Verbindungsleitung umfasst also ein erstes Ende, das mit dem dritten Knoten verbunden ist, und ein zweites Ende, das mit vierten Knoten verbunden oder verbindbar ist. Die Freilaufdiode ist demnach in der vierten Verbindungsleitung zwischen dem ersten Ende und dem zweiten Ende der vierten Verbindungsleitung angeordnet und für einen Strom vom dritten Knoten bzw. vom ersten Ende zum zweiten Ende der vierten Verbindungsleitung in Sperrrichtung angeordnet. Die Voraufladeschaltung umfasst eine dritte Schalteinheit, die in der dritten Verbindungsleitung zwischen dem ersten Knoten bzw. dem ersten Ende der dritten Verbindungsleitung und dem dritten Knoten angeordnet ist und zum Schalten eines Stroms vom ersten Knoten bzw. vom ersten Ende der dritten Verbindungsleitung zum dritten Knoten eingerichtet ist.

Die Energiespeichervorrichtung umfasst ferner eine Steuereinheit zum Steuern der Voraufladeschaltung. Im Rahmen der vorliegenden Offenbarung umfasst "Steuern" sowohl Steuern (open loop) als auch Regeln (closed loop). Die Steuereinheit kann dazu eingerichtet sein, die Voraufladeschaltung zu steuern, um die Stärke eines Entladestroms für die Energiespeichereinheit auf den vorgegebenen Entladestrom-Schwellwert zu begrenzen. Die Steuereinheit kann insbesondere eingerichtet sein, die erste Schalteinheit und/oder die dritte Schalteinheit zu schalten, um die Stärke des Entladestroms für die Energiespeichereinheit auf den vorgegebenen Entladestrom-Schwellwert zu begrenzen.

Durch diese Voraufladeschaltung wird also vorteilhafterweise eine Strombegrenzung für Entladeströme der Energiespeichereinheit, also Ströme, die aus der Energiespeichereinheit fließen, ermöglicht. Auf der anderen Seite erfolgt keine Strombegrenzung oder eine wesentliche höhere Strombegrenzung für Ladeströme, also Ströme, die in die Energiespeichereinheit fließen. Die Voraufladeschaltung umfasst keinen ohmschen Widerstand. Daher ist die Voraufladeschaltung verlustarm. Durch die Voraufladeschaltung kann der Hauptschalter beim Parallelschalten von mehreren Energiespeichervorrichtungen, insbesondere mit gleicher nomineller Spannung der Energiespeichereinheiten, und bei einer Verschaltung mit einem Verbraucher oder Last, insbesondere mit einer kapazitiven und/oder ohmschen Last, entlastet werden.

Gemäß einem weiteren Aspekt der vorliegenden Offenbarung ist ein Energiespeichersystem für ein Wasserfahrzeug angegeben, wobei das Energiespeichersystem N Energiespeichervorrichtungen gemäß Ausführungsformen der vorliegenden Offenbarung umfasst, wobei die N Energiespeichervorrichtungen mittels der ersten und zweiten Anschlüsse in Parallelschaltung miteinander verbunden sind. Hierbei ist N eine natürliche Zahl gleich oder größer als 2.

Im Rahmen dieser Offenbarung bezeichnet eine "(elektrische) Verbindung", zwischen zwei Elementen, beispielsweise Bauteile, Pole, Anschlüsse oder Knoten, oder eine äquivalente Formulierung, dass zwischen diesen eine Verbindung besteht, die elektrisch leitend oder stromleitend ist, d.h. es kann zwischen diesen ein elektrischer Strom fließen. Die elektrische Verbindung kann durch eine Verbindungsleitung, kurz Leitung, dazwischen ausgebildet sein, wobei die Verbindungsleitung zumindest ein elektrisches oder elektronisches Bauteil aufweisen kann. "Direkt verbunden" bedeutet in diesem Zusammenhang, dass eine Verbindungsleitung zwischen den Elementen keine weiteren elektrischen oder elektronischen Bauteile aufweist.

Ein Schalten einer elektrischen Verbindung oder eines Stroms umfasst das Herstellen einer elektrischen Verbindung, sodass ein Stromfluss darüber möglich ist und das Trennen/Unterbrechen der elektrischen Verbindung, sodass ein Stromfluss unterbrochen bzw. kein Stromfluss möglich ist bzw. ein Stromfluss verhindert wird. Das Trennen der elektrischen Verbindung kann beispielsweise durch Unterbrechen oder Trennen der Verbindungsleitung, beispielsweise mittels eines Schalters oder eines Transistors erfolgen, sodass die beiden Enden der Verbindungsleitung elektrisch voneinander isoliert sind. Das Herstellen der stromleitenden Verbindung kann durch Schließen der Verbindungsleitung erfolgen, sodass zwischen den beiden Enden (wieder) Strom fließen kann.

Ein Strom oder Stromfluss zwischen zwei Elementen oder Knoten umfasst einen Strom in die eine Richtung zwischen den zwei Elementen und einen Strom in die andere, dazu entgegengesetzte Richtung. Ein Strom oder Stromfluss von einem ersten Element zu einem zweiten Element bezeichnet einen Strom mit positiver Stromstärke vom ersten Element zum zweiten Element. Ein Wert eines Stroms oder einer Stromstärke bedeutet den Betrag der Stromstärke. Der Entladestrom bezeichnet einen Strom von oder aus der Energiespeichereinheit über den ersten Pol zum Entladen der Energiespeichereinheit und der Ladestrom bezeichnet einen Strom über den ersten Pol zur oder in die Energiespeichereinheit zum Laden der Energiespeichereinheit. Ein Laden der Energiespeichervorrichtung bedeutet ein Laden der Energiespeichereinheit davon und ein Entladen der Energiespeichervorrichtung bedeutet ein Entladen der Energiespeichereinheit davon.

Eine Verbindungsleitung kann durch ein elektrisch leitendes Medium, beispielsweise eine Leiterbahn, ein Kabel oder eine Ader, realisiert werden. Das Schalten einer Schalteinheit, eines Schalters oder eines Transistors umfasst das Öffnen dieser Elemente, sodass die entsprechende elektrische Verbindung bzw. die Verbindungsleitung getrennt wird und das Schließen dieser Elemente, sodass die elektrische Verbindung hergestellt bzw. die Verbindungsleitung geschlossen wird. Das Öffnen kann auch als Einschalten oder Aktivieren und das Schließen kann auch als Ausschalten oder Deaktivieren bezeichnet werden.

Die Begriffe "Batterie" bzw. "Batteriesystem" bzw. "Batteriebank" oder ähnliche Begriffe werden in der vorliegenden Offenbarung dem üblichen Sprachgebrauch angepasst für "Akkumulator" bzw. "Akkumulatorsystem" bzw. "Akkumulatorbank" verwendet. Gleiches gilt für entsprechende Begriffe.

Eine Spannungsdifferenz der Spannung des ersten Pols bezogen auf die Spannung des zweiten Pols der Energiespeichereinheit kann als Spannung der Energiespeichereinheit oder als Spannung an der Energiespeichereinheit bezeichnet werden. Eine Spannungsdifferenz der Spannung am ersten Anschluss bezogen auf eine Spannung am zweiten Anschluss kann als Spannung der Anschlüsse oder als Spannung an den Anschlüssen bezeichnet werden. Eine Parallelschaltung der Energiespeichervorrichtungen in einem Energiespeichersystem bedeutet, dass die Energiespeichervorrichtungen mittels der ersten und zweiten Anschlüsse parallel verschaltet sind. D.h. die ersten und zweiten Anschlüsse der jeweiligen Energiespeichervorrichtungen sind parallel verschaltet.

Die Aspekte der vorliegenden Offenbarung können ein oder mehrere der folgenden optionalen Merkmale umfassen.

Die Energiespeichervorrichtung kann eingerichtet sein, um mittels des ersten Anschlusses und zweiten Anschlusses mit zumindest einer weiteren Energiespeichervorrichtung in Parallelschaltung verbunden zu werden.

Die Energiespeichereinheit kann eingerichtet sein, um elektrische Energie zu speichern. Die Energiespeichereinheit kann jedwede Einrichtung zur Speicherung von Energie sein, die mit elektrischer Energie aufgeladen und der elektrische Energie entnommen werden kann. Die Energiespeichereinheit kann zumindest eine Batteriezelle sein oder umfassen. Alternativ oder zusätzlich kann die Energiespeichereinheit zumindest ein Batteriemodul mit zumindest einer Batteriezelle sein oder umfassen. Vorzugsweise kann die zumindest eine Batteriezelle eine Lithiumbasierte Batteriezelle, insbesondere eine Lithium-Ionen-basierte Batteriezelle, sein. Auch kann die Energiespeichereinheit ein Schwungradsystem oder ein Kondensator, beispielsweise ein Elektrolytkondensator oder ein Superkondensator, sein oder umfassen.

Gemäß Ausführungsformen umfasst die Energiespeichervorrichtung eine zweite Schalteinheit. Die Steuereinheit kann eingerichtet sein, um die zweite Schalteinheit zu schalten. Die zweite Schalteinheit kann auch als zweiter Hauptschalter bezeichnet werden.

Die zweite Schalteinheit kann in der ersten Verbindungsleitung zwischen dem ersten Knoten und dem ersten Pol angeordnet und zum Schalten eines Stroms vom ersten Knoten zum ersten Pol eingerichtet sein. Alternativ oder zusätzlich kann die zweite Schalteinheit in der zweiten Verbindungsleitung zwischen dem zweiten Pol und dem vierten Knoten angeordnet und zum Schalten eines Stroms vom zweiten Pol zum vierten Knoten eingerichtet sein.

Gemäß Ausführungsformen kann die erste Schalteinheit einen ersten Schalter zwischen dem ersten Knoten und dem zweiten Knoten und eine zu dem ersten Schalter parallel verbundene erste Diode umfassen, die für einen Strom über die erste Diode vom ersten Knoten zum zweiten Knoten in Sperrrichtung angeordnet ist. Die erste Diode kann für einen Strom vom zweiten Knoten zum ersten Knoten in Durchlassrichtung angeordnet sein. Somit sind der erste Schalter und die erste Diode jeweils mit dem ersten Knoten und dem zweiten Knoten verbunden. Demnach kann die erste Diode zwischen dem ersten Knoten und dem zweiten Knoten angeordnet sein.

Auch kann die dritte Schalteinheit einen dritten Schalter zwischen dem ersten Knoten und dem dritten Knoten und eine zu dem dritten Schalter parallel verbundene dritte Diode umfassen, die für einen Strom über die dritte Diode vom ersten Knoten zum dritten Knoten in Sperrrichtung angeordnet ist. Die dritte Diode kann für einen Strom vom dritten Knoten zum ersten Knoten in Durchlassrichtung angeordnet sein. Somit sind der dritte Schalter und die dritte Diode jeweils mit dem ersten Knoten und dem dritten Knoten verbunden. Demnach kann die dritte Diode zwischen dem ersten Knoten und dem dritten Knoten angeordnet sein.

Auch kann die zweite Schalteinheit einen zweiten Schalter zwischen dem ersten Knoten und dem ersten Pol und eine zu dem zweiten Schalter parallel verbundene zweite Diode umfassen, die für einen Strom über die zweite Diode vom ersten Knoten zum ersten Pol in Sperrrichtung angeordnet ist. Die zweite Diode kann für einen Strom vom ersten Pol zum ersten Knoten in Durchlassrichtung angeordnet sein. Somit sind der zweite Schalter und die zweite Diode jeweils mit dem ersten Knoten und dem ersten Pol verbunden. Demnach kann die zweite Diode zwischen dem ersten Knoten und dem ersten Pol angeordnet sein.

Die Energiespeichervorrichtung umfasst eine vierte Schalteinheit, die in der vierten Verbindungsleitung zwischen dem dritten Knoten und dem vierten Knoten angeordnet und zum Schalten eines Stroms vom dritten Knoten zum vierten Knoten eingerichtet ist. Die vierte Schalteinheit ist in der vierten Verbindungsleitung zwischen dem ersten Ende und dem zweiten Ende der vierten Verbindungsleitung angeordnet und zum Schalten eines Stroms vom dritten Knoten zum zweiten Ende der vierten Verbindungsleitung eingerichtet. Die vierte Schalteinheit kann die Freilaufdiode umfassen. Bevorzugt umfasst die Schalteinheit einen vierten Schalter zwischen dem vierten Knoten und dem zweiten Knoten, wobei die Freilaufdiode zu dem vierten Schalter parallel verbunden ist. Hier sind der vierte Schalter und die Freilaufdiode jeweils mit dem dritten Knoten und dem vierten Knoten verbunden. Die Steuereinheit kann eingerichtet sein, um die vierte Schalteinheit zu schalten.

Jede der Schalteinheiten ist eingerichtet, um Strom in einer Richtung zu schalten. Jede der Schalteinheiten kann eingerichtet sein, um Strom in der anderen Richtung durchzulassen oder nicht zu unterbrechen. Beispielsweise ist die erste Schalteinheit eingerichtet, um Strom vom ersten Knoten zum zweiten Knoten zu schalten. Weiter ist beispielsweise die zweite Schalteinheit eingerichtet, um Strom vom ersten Knoten zum ersten Pol zu schalten. Weiter ist beispielsweise die dritte Schalteinheit eingerichtet, um Strom vom ersten Knoten zum dritten Knoten zu schalten. Auch ist beispielsweise die vierte Schalteinheit eingerichtet, um Strom vom dritten Knoten zum vierten Knoten zu schalten.

Die erste Schalteinheit kann als Leistungsschalter, insbesondere als Leistungstransistor, vorzugsweise als MOSFET, ausgebildet sein. Hier kann die erste Diode vorzugsweise durch eine parasitäre Diode davon gebildet werden. Zudem kann die zweite Schalteinheit als Leistungsschalter, insbesondere als Leistungstransistor, vorzugsweise als MOSFET, ausgebildet sein. Hier kann die zweite Diode vorzugsweise durch eine parasitäre Diode davon gebildet werden. Auch kann die dritte Schalteinheit als Leistungsschalter, insbesondere als Leistungstransistor, vorzugsweise als MOSFET, ausgebildet sein. Hier kann die dritte Diode vorzugsweise durch eine parasitäre Diode davon gebildet werden. Besonders bevorzugt kann die vierte Schalteinheit als Leistungsschalter, insbesondere als Leistungstransistor, vorzugsweise als MOSFET, ausgebildet sein. Hier kann die Freilaufdiode vorzugsweise durch eine parasitäre Diode davon gebildet werden. Bei jeder der ersten bis vierten Schalteinheiten ist es bevorzugt, während der natürlichen Diodenleitphase den MOSFET-Kanal parallel aufzusteuern, d.h. den MOSFET einzuschalten, um durch die damit erreichte Stromaufteilung eine Verlustreduzierung zu erreichen.

Der jeweilige Leistungsschalter kann auch als leistungselektronisches Schaltelement bezeichnet werden. Die Leistungsschalter kann für Strom in nur einer Richtung sperrfähig sein. Dadurch kann die jeweilige Schalteinheit eingerichtet sein, um Strom in dieser Richtung zu schalten. Demnach kann der Leistungsschalter für Strom in der zu dieser Richtung entgegengesetzten Richtung nicht sperrfähig sein. Die eine Richtung kann als Vorwärtsrichtung bezeichnet werden. Die andere Richtung kann als Rückwärtsrichtung bezeichnet werden. Demnach kann der Leistungsschalter in Vorwärtsrichtung sperrfähig und in Rückwärtsrichtung nicht sperrfähig sein.

Somit kann mittels der zweiten Schalteinheit ein Ladestrom für die Energiespeichereinheit geschaltet werden. Beispielsweise kann durch Öffnen der zweiten Schalteinheit der Ladestrom unterbrochen werden. Ferner kann mittels der ersten Schalteinheit und der dritten Schalteinheit ein Entladestrom geschaltet werden. Beispielsweise kann durch Öffnen der ersten und dritten Schalteinheiten der Entladestrom unterbrochen werden.

Die Steuereinheit ist eingerichtet, das Steuerverfahren für die Energiespeichervorrichtung und/oder das Energiespeichersystem gemäß Ausführungsformen der vorliegenden Offenbarung durchzuführen. Insbesondere kann die Steuereinheit eingerichtet sein, um Regelverfahren gemäß Ausführungsformen der vorliegenden Offenbarung durchzuführen.

Die Steuereinheit kann als Zweipunkt-Regler, Hysterese-Regler und/oder als Begrenzungsregler, vorzugsweise als linearer Begrenzungsregler, ausgebildet sein.

Die Steuereinheit kann vorzugsweise eingerichtet sein, um die erste Schalteinheit und/oder die zweite Schalteinheit und/oder die dritte Schalteinheit und/oder die vierte Schalteinheit zu steuern oder zu schalten. Das Steuern der Schalteinheiten meint hier das Ansteuern der Schalteinheiten, um die Schalteinheiten zu schalten, also zu öffnen bzw. einzuschalten oder zu schließen bzw. auszuschalten.

Die Steuereinheit kann eingerichtet sein, zumindest eine der ersten Schalteinheit, der zweiten Schalteinheit, der dritten Schalteinheit und der vierten Schalteinheit wiederholt zu schalten. Auch kann die Steuereinheit eingerichtet sein, zumindest eine der Schalteinheiten abwechselnd zu schalten, d.h. abwechselnd zu öffnen und zu schließen. Die Steuereinheit kann insbesondere eingerichtet sein, zumindest eine der Schalteinheiten wiederholt und abwechselnd, insbesondere basierend auf einer vorgegebenen Schaltfrequenz und/oder basierend auf einem vorgegebenen Tastverhältnis zu schalten, auch als getaktetes oder periodisches Schalten bezeichnet.

Die Steuereinheit kann eingerichtet sein, zumindest der eine Schalteinheiten basierend auf oder unter Verwendung eines Pulsweitenmodulationsverfahrens zu schalten. Hier kann ein Kehrwert der Schaltfrequenz eine Summe einer Öffnungsdauer der entsprechenden Schalteinheit und einer Schließdauer der Schalteinheit angeben. Hier kann die Öffnungsdauer der entsprechenden Schalteinheit eine Zeitdauer zwischen dem Öffnen und dem Schließen, also die Zeitdauer, während der die Schalteinheit geöffnet ist, definieren. Die Schließdauer der Schalteinheit kann eine Zeitdauer zwischen dem Schließen und dem Öffnen, also die Zeitdauer, während der die Schalteinheit geschlossen ist, definieren. Das Tastverhältnis oder Tastgrad kann ein Verhältnis zwischen der Schließdauer und der Summe der Öffnungsdauer und der Schließdauer definieren. Hierbei kann ein großes Tastverhältnis einer großen Pulsweite des Pulsweitenmodulationsverfahrens entsprechen und umgekehrt. Die Pulsweite kann der Schließdauer entsprechen. Der Tastgrad kann auch als "Duty-Cycle" bezeichnet werden.

Alternativ oder zusätzlich kann die Steuereinheit eingerichtet sein, um zumindest eine der Schalteinheiten basierend auf oder unter Verwendung eines Zweipunkt-Regelverfahrens und/oder eines Hysterese-Regelverfahrens und/oder eines linearen Regelverfahrens zu schalten.

Die Steuereinheit kann eingerichtet sein, um zumindest eine der Schalteinheiten basierend auf einer Richtung und/oder Stärke eines Stroms und/oder basierend auf einer Höhe einer Spannung zu schalten.

Beispielsweise kann die die Steuereinheit eingerichtet sein, um zumindest eine der ersten Schalteinheit, der zweiten Schalteinheit, der dritten Schalteinheit und der vierten Schalteinheit basierend auf oder in Abhängigkeit von zumindest einem der folgenden zu schalten: einer Höhe der Spannung an der Energiespeichereinheit, eine Höhe der Spannung an den Anschlüssen, ein Verhältnis zwischen diesen Spannungshöhen, eine Richtung und/oder Stärke eines Stroms über die erste Verbindungsleitung zwischen dem ersten Anschluss und dem zweiten Knoten, eine Richtung und/oder Stärke eines Stroms über die dritte Verbindungsleitung zwischen dem dritten Knoten und dem zweiten Knoten, eine Richtung und/oder Stärke eines Stroms über die erste Verbindungsleitung zwischen dem ersten Knoten und dem ersten Pol, eine Stärke des Ladestroms für die Energiespeichereinheit, eine Stärke des Entladestroms für die Energiespeichereinheit.

Gemäß einer Ausführungsform kann die Steuereinheit eingerichtet sein, um in einem optionalen ersten Schritt die dritte Schalteinheit zu schließen. In diesem ersten Schritt kann die Steuereinheit auch den zweiten Schalter und schließen. Das Schließen des zweiten Schalters kann gleichzeitig, vor oder nach dem Schließen der dritten Schalteinheit erfolgen.

Die Steuereinheit kann ferner dazu eingerichtet sein, in einem zweiten Schritt die erste Schalteinheit zu schließen, insbesondere wenn ein Strom vom ersten Anschluss zum zweiten Knoten fließt oder vorhanden ist, oder wenn ein Ladestrom fließt oder vorhanden ist. Hier kann das Vorhandensein eines Stroms so definiert sein, dass eine Stärke des Stroms größer als ein unterer Schwellwert, beispielsweise 0 A, ist. In einem optionalen dritten Schritt kann die Steuereinheit die dritte Schalteinheit öffnen, insbesondere unmittelbar nach dem Schließen der ersten Schalteinheit. Dadurch kann der Ladestrom für die Energiespeichereinheit auf vorteilhafte Weise im Wesentlichen vollständig über die erste Schalteinheit fließen. Hier kann die erste Schalteinheit eine höhere Stromtragfähigkeit als die dritte Schalteinheit aufweisen.

Gemäß einer weiteren Ausführungsform, die mit anderen Ausführungsformen der vorliegenden Offenbarung kombiniert werden kann, kann die Steuereinheit eingerichtet sein, um in einem optionalen ersten Schritt, die dritte Schalteinheit zu schließen. In diesem ersten Schritt kann die Steuereinheit auch die zweite Schalteinheit schließen. Das Schließen der zweiten Schalteinheit kann gleichzeitig, vor oder nach dem Schließen der dritten Schalteinheit erfolgen. Die Steuereinheit kann ferner dazu eingerichtet sein, um in einem zweiten Schritt die dritte Schalteinheit zu öffnen. Die Steuereinheit kann eingerichtet sein, um in einem dritten Schritt die dritte Schalteinheit zu schließen. Die Steuereinheit kann den zweiten und den dritten Schritt wiederholt und abwechselnd durchführen. Mit anderen Worten kann die Steuereinheit die dritte Schalteinheit wiederholt und abwechselnd öffnen und schließen. Demnach kann die Steuereinheit eingerichtet sein, um die dritte Schalteinheit derart wiederholt und abwechselnd zu öffnen und zu schließen, dass ein zeitlicher Mittelwert oder ein Maximalwert der Stromstärke des Entladestroms und/oder eines Stroms vom dritten Knoten zum zweiten Knoten gleich oder kleiner als der Entladestrom-Schwellwert ist.

Die Steuereinheit kann eingerichtet sein, die dritte Schalteinheit basierend auf einer vorgegebenen Vorauflade-Schaltfrequenz und/oder basierend auf einem vorgegebenen Vorauflade-Tastverhältnis wiederholt und abwechselnd zu öffnen und zu schließen, d.h. wiederholt und abwechselnd zu schalten. Dadurch kann die Steuereinheit ein Pulsweitenmodulationsverfahren zum Schalten der dritten Schalteinheit durchführen. Die Steuereinheit kann eingerichtet sein, die Vorauflade-Schaltfrequenz und/oder das Vorauflade-Tastverhältnis einzustellen und/oder verändern. Beispielsweise kann die Steuereinheit eingerichtet sein, um die Vorauflade-Schaltfrequenz und/oder das Vorauflade-Tastverhältnis kontinuierlich und/oder stufenförmig zu verändern, insbesondere zu verringern oder zu erhöhen.

Die Steuereinheit kann eingerichtet sein, um die dritte Schalteinheit im zweiten Schritt zu öffnen, wenn die Stromstärke des Stroms vom dritten Knoten zum zweiten Knoten oder des Entladestroms größer als ein vorgegebener erster Schwellwert ist oder diesen Schwellwert überschreitet. Die Steuereinheit kann eingerichtet sein, um die dritte Schalteinheit im dritten Schritt zu schließen, wenn die Stromstärke gleich oder kleiner als ein vorgegebener zweiter Schwellwert ist oder diesen unterschreitet. Der zweite Schwellwert kann dabei gleich oder kleiner als der erste Schwellwert sein. Dadurch kann die Steuereinheit ein Zweipunkt-Regelverfahren bzw. ein Hysterese-Regelverfahren durchführen. Hierbei kann der erste Schwellwert gleich oder größer als der Entladestrom-Schwellwert sein. Entsprechend kann der Maximalwert oder der zeitliche Mittelwert der Stromstärke des Entladestroms bzw. des Stroms vom dritten Knoten zum zweiten Knoten auf den Entladestrom-Schwellwert begrenzt werden.

Gemäß einer noch weiteren Ausführungsform, die mit anderen Ausführungsformen der vorliegenden Offenbarung kombiniert werden kann, kann die Steuereinheit eingerichtet sein, um die erste Schalteinheit zu schließen. Die Steuereinheit kann eingerichtet sein, um diesen Schritt durchzuführen, wenn die Stromstärke des Stroms vom dritten Knoten zum zweiten Knoten und/oder die Stromstärke des Entladestroms gleich oder kleiner als ein vorgegebener dritter Schwellwert ist oder den dritten Schwellwert unterschreitet und/oder wenn eine Differenz zwischen der Höhe der Spannung an der Energiespeichereinheit und der Höhe der Spannung an den Anschlüssen gleich oder kleiner als ein vorgegebener vierter Schwellwert ist oder den vierten Schwellwert unterschreitet. Die Differenz kann das Ergebnis einer Subtraktion der Höhe der Spannung an den Anschlüssen von der Höhe der Spannung an der Energiespeichereinheit angeben. Die Steuereinheit kann eingerichtet sein, anschließend die erste Schalteinheit kontinuierlich geschlossen zu lassen, insbesondere nicht mehr zu öffnen. Die Steuereinheit kann eingerichtet sein, um die dritte Schalteinheit nach Schließen der ersten Schalteinheit zu öffnen, insbesondere unmittelbar danach. Die Steuereinheit kann eingerichtet sein, um die dritte Schalteinheit kontinuierlich geöffnet zu lassen, insbesondere nicht mehr zu schließen. Der vierte Schwellwert kann einer maximal zulässigen Spannungsdifferenz zwischen der Spannung an der Energiespeichereinheit und der Spannung an den Anschlüssen entsprechen.

Die Steuereinheit kann eingerichtet sein, die Voraufladeschaltung zu steuern, um insbesondere während eines Ladevorgangs der Energiespeichereinheit oder während ein Ladestrom zum Laden der Energiespeichereinheit fließt die Spannung an der Energiespeichereinheit zu erhöhen oder aufrechtzuerhalten und/oder um die Stromstärke des Ladestroms aufrechtzuerhalten. Die Steuereinheit ist eingerichtet, die vierte Schalteinheit zu schalten, um die Spannung an der Energiespeichereinheit zu erhöhen oder aufrechtzuerhalten und/oder um die Stromstärke des Ladestroms zu erhöhen aufrechtzuerhalten.

Gemäß einer weiteren Ausführungsform, die mit anderen Ausführungsformen der vorliegenden Offenbarung kombiniert werden kann, kann die Steuereinheit eingerichtet sein, um in einem optionalen ersten Schritt die zweite Schalteinheit zu schließen. In diesem ersten Schritt kann die Steuereinheit auch die erste Schalteinheit schließen. Die Steuereinheit kann eingerichtet sein, um in einem optionalen zweiten Schritt die erste Schalteinheit zu öffnen. Die Steuereinheit ist eingerichtet, um in einem dritten Schritt die vierte Schalteinheit zu schließen. Die Steuereinheit ist eingerichtet, um in einem vierten Schritt die vierte Schalteinheit zu öffnen. Die Steuereinheit kann eingerichtet sein, um in einem optionalen fünften Schritt die zweite Schalteinheit zu öffnen. Vorzugsweise öffnet die Steuereinheit die zweite Schalteinheit, wenn der SOC der Energiespeichereinheit mehr als 99%, insbesondere annähernd oder im Wesentlichen 100%, erreicht hat und/oder wenn die Spannung U an der Energiespeichereinheit einen vorgegebenen Wert erreicht hat. Die dritte Schalteinheit kann während der ersten bis fünften Schritte geöffnet oder geschlossen sein. Vorzugsweise ist die dritte Schalteinheit zumindest dann geschlossen, wenn die vierte Schalteinheit geöffnet ist.

Gemäß Ausführungsformen kann die Steuereinheit die erste Schalteinheit gemäß dem optionalen zweiten Schritt öffnen und die vierte Schalteinheit gemäß den dritten und vierten Schritten und erstmalig schalten, wenn der Strom vom ersten Anschluss zum zweiten Knoten und/oder wenn der Ladestrom gleich oder kleiner als ein Booster-Schwellwert ist oder den Booster-Schwellwert unterschreitet und/oder wenn die Spannung an den Anschlüssen und/oder die Spannung an der Energiespeichereinheit größer als ein vorgegebener Lade-Spannungsschwellwert ist.

Die Steuereinheit ist eingerichtet sein, um den dritten Schritt und den vierten Schritt abwechselnd und/oder wiederholt durchzuführen. Anders gesagt ist die Steuereinheit eingerichtet, die vierte Schalteinheit wiederholt und abwechselnd zu öffnen und zu schließen. Insbesondere ist die Steuereinheit eingerichtet, um die vierte Schalteinheit derart wiederholt und abwechselnd zu öffnen und zu schließen, dass ein zeitlicher Mittelwert oder ein Minimalwert der Stromstärke des Ladestroms und/oder eines Stroms über die erste Verbindungsleitung vom ersten Anschluss und zum zweiten Knoten gleich oder größer als der Booster-Schwellwert ist.

Hier kann die Steuereinheit eingerichtet sein, die vierte Schalteinheit basierend auf einer vorgegebenen Lade-Schaltfrequenz und/oder basierend auf einem vorgegebenen Lade-Tastverhältnis wiederholt und abwechselnd zu öffnen und zu schließen, d.h. wiederholt und abwechselnd zu schalten. Dadurch kann die Steuereinheit ein Pulsweitenmodulationsverfahren zum Schalten der vierten Schalteinheit durchführen. Die Steuereinheit kann eingerichtet sein, die Lade-Schaltfrequenz und/oder das Lade-Tastverhältnis einzustellen und/oder verändern. Beispielsweise kann die Steuereinheit eingerichtet sein, um die Lade-Schaltfrequenz und/oder das Lade-Tastverhältnis kontinuierlich und/oder stufenförmig zu verändern, insbesondere zu verringern oder zu erhöhen.

Die Steuereinheit kann eingerichtet sein, um die vierte Schalteinheit im dritten Schritt zu schließen, wenn die Stromstärke des Stroms vom ersten Anschluss zum zweiten Knoten oder die Stromstärke des Ladestroms kleiner als ein vorgegebener erster Lade-Schwellwert ist oder diesen Schwellwert überschreitet. Die Steuereinheit kann eingerichtet sein, um die vierte Schalteinheit im dritten Schritt zu öffnen, wenn die Stromstärke gleich oder größer als ein vorgegebener zweiter Lade-Schwellwert ist oder diesen überschreitet. Der zweite Lade-Schwellwert kann dabei gleich oder größer als der erste Lade-Schwellwert sein. Dadurch kann die Steuereinheit ein Zweipunkt-Regelverfahren bzw. ein Hysterese-Regelverfahren durchführen. Hierbei kann der erste Schwellwert gleich oder kleiner als der Booster-Schwellwert sein. Entsprechend kann der Minimalwert oder der zeitliche Mittelwert der Stromstärke des Ladestroms bzw. des Stroms vom ersten Anschluss zum zweiten Knoten auf dem Booster-Schwellwert aufrechterhalten werden.

Dadurch kann während eines Ladevorgangs der Energiespeichereinheit bzw. während ein Ladestrom fließt, der Ladestrom aufrechterhalten oder erhöht und/oder die Spannung an der Energiespeichereinheit kann aufrechterhalten oder erhöht werden. Demnach kann die Voraufladeschaltung als Aufwärtswandler ("Boost Converter", "Booster") verwendet werden. Dadurch kann während eines Ladevorgangs der Energiespeichereinheit durch eine externe Ladevorrichtung sichergestellt werden, dass die Energiespeichereinheit zuverlässig bis zum einem SOC von 100 % geladen wird.

Dadurch kann eine externe Ladevorrichtung zum Laden der Energiespeichervorrichtung mit negativer Toleranz bezüglich der Ladeschlussspannung der Energiespeichereinheit verwendet werden und eine Kommunikation zwischen der Energiespeichervorrichtung und der Ladevorrichtung ist dafür nicht erforderlich. Zudem kann der Booster einfach realisiert werden, da die Freilaufdiode lediglich durch die parasitäre Diode einer vierten Schalteinheit, insbesondere eines Leistungstransistors wie eines MOSFETS, zu realisieren ist und die Steuereinheit dafür einzurichten ist, die vierte Schalteinheit zu schalten.

Gemäß einem weiteren Aspekt der vorliegenden Offenbarung ist ein Vorauflade-Steuerverfahren für eine Energiespeichervorrichtung gemäß Ausführungsformen der vorliegenden Offenbarung vorgesehen.

Das Vorauflade-Steuerverfahren gemäß Ausführungsformen umfasst einen optionalen Schritt zum Schließen der dritten Schalteinheit. Hier kann auch die zweite Schalteinheit geschlossen werden. Das Vorauflade-Steuerverfahren umfasst ferner einen Schritt zum Schließen der ersten Schalteinheit, wenn ein Strom vom ersten Anschluss zum zweiten Knoten fließt oder wenn ein Ladestrom fließt, und einen optionalen Schritt zum Öffnen der dritten Schalteinheit nach dem Schließen der ersten Schalteinheit, insbesondere unmittelbar nach dem Schließen der ersten Schalteinheit.

Das Vorauflade-Steuerverfahren umfasst gemäß alternativen oder zusätzlichen Ausführungsformen einen optionalen Schritt zum Schließen der dritten Schalteinheit. Hier kann auch die zweite Schalteinheit geschlossen werden. Das Verfahren umfasst ferner den Schritt zum Öffnen der dritten Schalteinheit und einen Schritt zum Schließen der dritten Schalteinheit.

Der Schritt zum Öffnen der dritten Schalteinheit und der Schritt zum Schließen der dritten Schalteinheit können wiederholt und/oder abwechselnd basierend auf einer vorgegebenen Vorauflade-Schaltfrequenz und/oder basierend auf einem vorgegebenen Vorauflade-Tastverhältnis durchgeführt werden. D.h. die dritte Schalteinheit kann wiederholt und abwechselnd basierend auf der vorgegebenen Schaltfrequenz und/oder basierend auf dem vorgegebenen Tastverhältnis geschaltet werden. Dadurch kann ein Pulsweitenmodulationsverfahren durchgeführt werden. Hier kann die Vorauflade-Schaltfrequenz und/oder das Vorauflade-Tastverhältnis kontinuierlich und/oder stufenförmig verändert, insbesondere verringert oder erhöht, werden.

Alternativ kann der Schritt zum Öffnen der dritten Schalteinheit durchgeführt werden, wenn die Stromstärke eines Stroms vom dritten Knoten zum zweiten Knoten oder des Entladestroms für die Energiespeichereinheit größer als ein vorgegebener erster Schwellwert ist oder diesen ersten Schwellwert überschreitet und/oder der Schritt zum Schließen der dritten Schalteinheit kann durchgeführt werden, wenn die Stromstärke gleich oder kleiner als ein vorgegebener zweiter Schwellwert ist oder den zweiten Schwellwert unterschreitet. Der zweite Schwellwert kann dabei gleich oder kleiner als der erste Schwellwert sein. Dadurch kann ein Zweipunkt-Regelverfahren bzw. ein Hysterese-Regelverfahren durchgeführt werden. Hierbei kann der erste Schwellwert gleich oder größer als der Entladestrom-Schwellwert sein.

Gemäß einem weiteren Aspekt der vorliegenden Offenbarung ist ein Lade-Steuerverfahren für eine Energiespeichervorrichtung gemäß Ausführungsformen der vorliegenden Offenbarung vorgesehen. Das Verfahren umfasst einen optionalen ersten Schritt zum Schließen der zweiten Schalteinheit. In diesem Schritt kann auch die erste Schalteinheit geschlossen werden. Das Verfahren umfasst einen optionalen zweiten Schritt zum Öffnen der ersten Schalteinheit. Das Verfahren umfasst einen dritten Schritt zum Schließen der vierten Schalteinheit und einen vierten Schritt zum Öffnen der vierten Schalteinheit. Das Verfahren umfasst einen optionalen fünften Schritt zum Öffnen der zweiten Schalteinheit. Die dritte Schalteinheit kann während des Verfahrens geöffnet oder geschlossen sein. Vorzugsweise ist die dritte Schalteinheit zumindest dann geschlossen, wenn die vierte Schalteinheit geöffnet ist.

Insbesondere können die dritten und vierten Schritte abwechselnd und/oder wiederholt durchgeführt werden. Anders gesagt wird die vierte Schalteinheit wiederholt und abwechselnd geöffnet und geschlossen, insbesondere basierend auf einer vorgegebenen Lade-Schaltfrequenz und/oder basierend auf einem vorgegebenen Lade-Tastverhältnis.

Dadurch kann ein Pulsweitenmodulationsverfahren zum Schalten der vierten Schalteinheit durchgeführt werden. Hier können die Schaltfrequenz und/oder das Tastverhältnis kontinuierlich und/oder stufenförmig verändert, insbesondere verringert oder erhöht werden.

Auch kann der dritte Schritt zum Schließen der vierten Schalteinheit durchgeführt werden, wenn die Stromstärke eines Stroms vom ersten Anschluss zum zweiten Knoten oder des Ladestroms für die Energiespeichereinheit kleiner als ein vorgegebener erster Lade-Schwellwert ist oder diesen Schwellwert unterschreitet und/oder der vierte Öffnen der vierten Schalteinheit kann durchgeführt werden, wenn die Stromstärke gleich oder größer als ein vorgegebener zweiter Lade-Schwellwert ist oder den zweiten Schwellwert unterschreitet. Der zweite Lade-Schwellwert kann dabei gleich oder größer als der erste Lade-Schwellwert sein. Dadurch kann ein Zweipunkt-Regelverfahren bzw. ein Hysterese-Regelverfahren durchgeführt werden. Hierbei kann der erste Schwellwert gleich oder kleiner als der Booster-Schwellwert sein.

Gemäß Ausführungsformen können die zweiten bis vierten Schritte durchgeführt werden, wenn der Strom vom ersten Anschluss zum zweiten Knoten und/oder der Ladestrom für die Energiespeichereinheit gleich oder kleiner als der vorgegebene Booster-Schwellwert ist oder den Booster-Schwellwert unterschreitet.

Gemäß einem weiteren Aspekt der vorliegenden Offenbarung ist ein Vorauflade-Steuerverfahren für ein Energiespeichersystem gemäß Ausführungsformen der vorliegenden Offenbarung angegeben. Das Vorauflade-Steuerverfahren für ein Energiespeichersystem umfasst das Durchführen des Vorauflade-Steuerverfahrens für zumindest eine, vorzugsweise mehrere, der Energiespeichervorrichtungen gemäß Ausführungsformen der vorliegenden Offenbarung. Das Vorauflade-Steuerverfahren kann insbesondere für alle Energiespeichervorrichtungen des Energiespeichersystems gleichzeitig durchgeführt werden.

Gemäß einem weiteren Aspekt der vorliegenden Offenbarung ist ein Lade-Steuerverfahren für ein Energiespeichersystem gemäß Ausführungsformen der vorliegenden Offenbarung angegeben. Das Lade-Steuerverfahren für ein Energiespeichersystem umfasst das Durchführen des Lade-Steuerverfahren für zumindest eine, vorzugsweise mehrere, der Energiespeichervorrichtungen gemäß Ausführungsformen der vorliegenden Offenbarung. Das Lade-Steuerverfahren kann insbesondere für alle Energiespeichervorrichtungen des Energiespeichersystems gleichzeitig durchgeführt werden.

Das Wasserfahrzeug kann ein Schiff, ein Boot oder eine Fähre sein oder dieses umfassen. Der erste Pol der Energiespeichereinheit kann ein Pluspol der Energiespeichereinheit sein und der zweite Pol der Energiespeichereinheit kann ein Minuspol der Energiespeichereinheit sein. Die Energiespeichervorrichtung gemäß Ausführungsformen der vorliegenden Offenbarung ist allgemein für Anwendungen geeignet, bei denen mehrere Energiespeichervorrichtungen in einem Energiespeichersystem miteinander verbunden sind oder werden. Beispielsweise ist die Energiespeichervorrichtung für Elektrofahrzeuge, stationäre Speicher, großtechnische Anlagen etc. geeignet.

Die Steuereinheit kann eingerichtet sein, den Entladestrom-Schwellwert und/oder den Ladestrom-Schwellwert einzustellen und/oder zu verändern. Somit können der Entladestrom-Schwellwert und/oder der Ladestrom-Schwellwert variabel bzw. einstellbar sein.

### Kurze Beschreibung der Figuren

Bevorzugte weitere Ausführungsformen der Offenbarung werden durch die nachfolgende Beschreibung der Figuren näher erläutert. Dabei zeigen:
- Figur 1: eine schematische Ansicht einer Energiespeichervorrichtung für ein Wasserfahrzeug gemäß Ausführungsformen der vorliegenden Offenbarung;
- Figur 2: eine schematische Ansicht einer Energiespeichervorrichtung für ein Wasserfahrzeug gemäß Ausführungsformen der vorliegenden Offenbarung;
- Figur 3: eine schematische Ansicht einer Energiespeichervorrichtung für ein Wasserfahrzeug gemäß ersten Ausführungsformen der vorliegenden Offenbarung;
- Figur 4: eine schematische Ansicht einer Energiespeichervorrichtung für ein Wasserfahrzeug gemäß Ausführungsformen der vorliegenden Offenbarung;
- Figur 5: eine schematische Ansicht einer Energiespeichervorrichtung für ein Wasserfahrzeug gemäß zweiten Ausführungsformen der vorliegenden Offenbarung;
- Figur 6: eine schematische Ansicht einer Energiespeichervorrichtung für ein Wasserfahrzeug gemäß Ausführungsformen der vorliegenden Offenbarung;
- Figur 7: ein Vorauflade-Steuerverfahren gemäß Ausführungsformen der vorliegenden Offenbarung;
- Figur 8: ein Vorauflade-Steuerverfahren gemäß einer ersten Ausführungsform der vorliegenden Offenbarung;
- Figur 9: ein Vorauflade-Steuerverfahren gemäß einer zweiten Ausführungsform der vorliegenden Offenbarung; und
- Figur 10: ein Lade-Steuerverfahren gemäß einer Ausführungsform der vorliegenden Offenbarung.

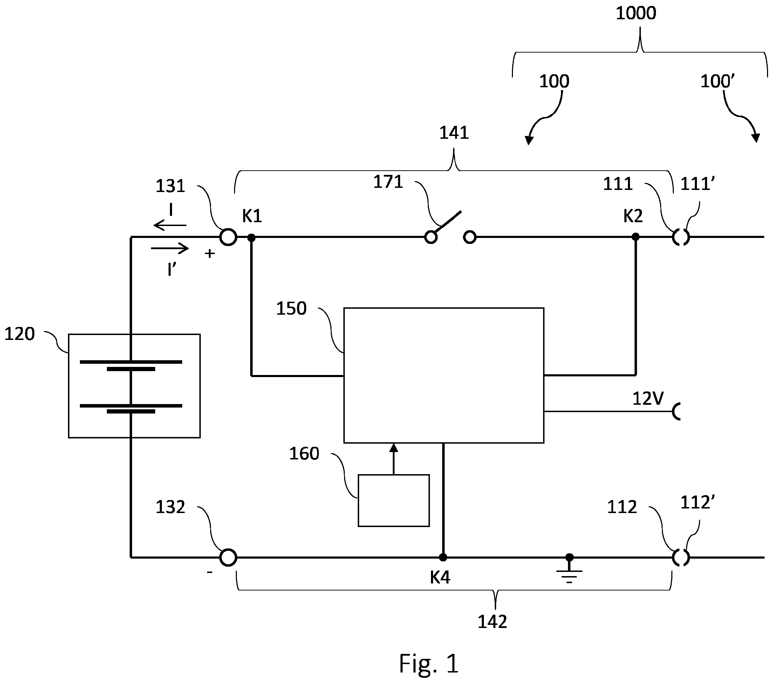

Die Ausführungsformen der Abbildungen 1 bis 4 sind nicht erfindungsgemäß und dienen lediglich der Veranschaulichung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

Figur 1 zeigt eine schematische Ansicht einer Energiespeichervorrichtung für ein Wasserfahrzeug gemäß Ausführungsformen der vorliegenden Offenbarung.

Die Energiespeichervorrichtung 100 umfasst einen ersten Anschluss 111 und einen zweiten Anschluss 112, und eine Energiespeichereinheit 120 mit einem ersten Pol 131 und einem zweiten Pol 132, wobei der erste Pol 131 mit dem ersten Anschluss 111 und der zweite Pol 132 mit dem zweiten Anschluss 112 verbunden ist. Genauer gesagt ist der erste Pol 132 über eine erste Verbindungsleitung 141 mit dem ersten Anschluss 111 verbunden und der zweite Pol 132 ist über eine zweite Verbindungsleitung 142 mit dem zweiten Anschluss 112 verbunden. Die Energiespeichereinheit 120 ist eingerichtet, um elektrische Energie zu speichern.

Die Energiespeichervorrichtung 100 umfasst ferner eine erste Schalteinheit 171. Die erste Schalteinheit 171 ist in der ersten Verbindungsleitung 141 zwischen dem ersten Knoten K1 und dem zweiten Knoten K2 angeordnet, d.h. sie ist mit dem ersten Knoten K1 und dem zweiten Knoten K2 verbunden. Die erste Schalteinheit 171 ist zum Schalten eines Stroms vom ersten Knoten K1 zum zweiten Knoten K2 eingerichtet. Die erste Schalteinheit 171 kann auch als erster Hauptschalter bezeichnet werden.

Die Energiespeichervorrichtung 100 ist eingerichtet, um in einem Energiespeichersystem 1000 für ein Wasserfahrzeug (nicht gezeigt) mittels des ersten Anschlusses 111 und zweiten Anschlusses 112 mit zumindest einer weiteren Energiespeichervorrichtung 100' in Parallelschaltung verbunden zu werden, was in Figur 1 durch die gestrichelt dargestellten ersten und zweiten Anschlüsse 111', 112' und Verbindungsleitungen der Energiespeichervorrichtung 100' veranschaulicht ist.

Gemäß Ausführungsformen der vorliegenden Offenbarung umfasst das Energiespeichersystem 1000 zwei oder mehr Energiespeichervorrichtungen 100, 100' gemäß Ausführungsformen der vorliegenden Offenbarung, wobei die Energiespeichervorrichtungen 100, 100 mittels der ersten und zweiten Anschlüsse 111, 111', 112, 112' in Parallelschaltung miteinander verbunden sind. Das Energiespeichersystem 1000 ist eingerichtet, um eine elektrische Last (nicht gezeigt), beispielsweise einen Antriebs-Elektromotor des Wasserfahrzeugs, mittels der elektrischen Energie aus den Energiespeichereinheiten 120 mit elektrischer Energie zu versorgen.

Werden mindestens zwei solcher Energiespeichervorrichtungen 100, 100' mit Energiespeichereinheiten 120 mit gleicher nomineller Spannung aber unterschiedlichen Ladungszuständen ("State of Charge", kurz "SOC") und damit unterschiedlichen Spannungshöhen parallel miteinander verbunden, dann findet ein Ausgleich des Energieinhalts bzw. der Ladungszustände zwischen den Energiespeichereinheiten 100, 100' durch entsprechende Ausgleichsströme statt. Hier erfolgt ein Stromfluss von der Energiespeichereinheit mit einem höheren Ladungszustand und somit mit einer höheren Spannung zur Energiespeichereinheit mit einem niedrigeren Ladungszustand und somit mit einer niedrigeren Spannung. Demnach wird die Energiespeichereinheit mit dem höheren Ladungszustand durch einen Entladestrom entladen und die Energiespeichereinheit mit dem niedrigeren Ladungszustand wird durch einen Ladestrom geladen.

Die Energiespeichervorrichtung 100 umfasst gemäß der vorliegenden Offenbarung eine Voraufladeschaltung 150 und eine Steuereinheit 160. Die Steuereinheit 160 ist eingerichtet, die Voraufladeschaltung 150 zu steuern, um die Stärke eines Entladestroms I' für die Energiespeichereinheit 120 auf einen vorgegebenen Entladestrom-Schwellwert zu begrenzen. Die Voraufladeschaltung 150 weist somit in dieser Hinsicht den Charakter einer (Konstant)-Stromquelle auf. Dadurch ist ein Ausgleichsstrom zwischen den in Parallelschaltung miteinander verbundenen Energiespeichervorrichtungen 100, 100' möglich, der weitgehend unabhängig vom Ladungszustand der jeweiligen Energiespeichereinheiten 120 ist. Demnach kann die Voraufladeschaltung 150 als Abwärtswandler ("Buck Converter") betrieben werden.

Die Energiespeichervorrichtung 100 kann ferner eingerichtet sein, um die Stärke eines Ladestroms I für die Energiespeichereinheit 120 nicht zu begrenzen oder um die Stärke des Ladestroms I auf einen Ladestrom-Schwellwert zu begrenzen, der größer ist als der Entladestrom-Schwellwert. Da der Ladestrom I nicht oder auf einen Schwellwert begrenzt wird, der größer ist als der Schwellwert für den Entladestrom I' kann die Voraufladeschaltung 150 für eine sogenannte asymmetrische Voraufladung von Energiespeichervorrichtungen 100, 100' in einem Energiespeichersystem 1000 verwendet werden.

Der Entladestrom I' bezeichnet hierbei einen Strom von der Energiespeichereinheit 120 über den ersten Pol 131, also einen Strom vom zweiten Pol 132 über die Energiespeichereinheit 120 zum ersten Pol 131, und der Ladestrom I bezeichnet einen Strom über den ersten Pol 131 zur Energiespeichereinheit 120, also einen Strom vom ersten Pol 131 über die Energiespeichereinheit 120 zum zweiten Pol 132.

Die Energiespeichereinheit 120 umfasst gemäß der in Figur 1 gezeigten Ausführungsform ein oder mehrere in Figur 1 schematisch angedeutete Batteriemodule, die in Reihe und/oder parallel geschaltet sind. Das bzw. die Batteriemodule umfassen jeweils eine oder mehrere, in Reihe und/oder parallel geschaltete Batteriezellen (nicht gezeigt). Demnach kann die Energiespeichervorrichtung 100 als Batterie und das Energiespeichersystem als Batteriesystem oder Batteriebank bezeichnet werden. Die Batteriezelle bzw. die Batteriezellen können Lithiumbasiert, insbesondere Lithium-Ionen-basiert, sein.

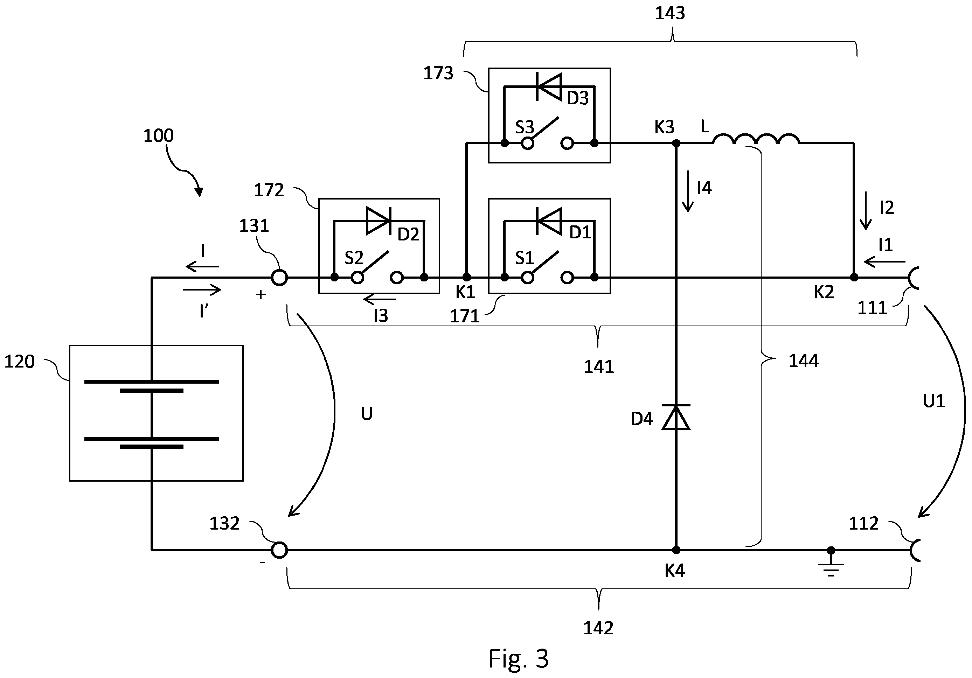

Das bzw. die Batteriemodule sind mit den ersten und zweiten Polen 131, 132 der Energiespeichereinheit 120 verbunden, um darüber die elektrische Energie bereitzustellen bzw. aufzunehmen und eine Spannung U (siehe Figur 3) zwischen den Polen 131, 132 bereitzustellen. Die Pole 131, 132 sind entgegengesetzt gepolt, wobei der erste Pol 131 der Pluspol und der zweite Pol 132 der Minuspol ist. Anders gesagt kann in einem Ruhezustand oder während eines Entladevorgangs der Energiespeichereinheit 120 der erste Pol 131 die Kathode der Energiespeichereinheit 120 bilden und der zweite Pol 132 kann die Anode der Energiespeichereinheit 120 bilden. Der Minuspol 132 kann mit einer Masse der Energiespeichervorrichtung 100 und/oder des Energiespeichersystems 100 verbunden sein. Die Spannung U kann positiv sein. Die Spannung U kann auch als Spannung der Energiespeichereinheit 120 bezeichnet werden.

Die Energiespeichereinheit 120 kann so ausgelegt sein, dass ein Wert für einen maximal möglichen Ladestrom für die Energiespeichereinheit 120 gleich oder größer als (N-1) mal der Entladestrom-Schwellwert ist. Auch kann der Ladestrom-Schwellwert gleich oder größer als (N-1) mal der Entladestrom-Schwellwert sein. Hierbei stellt N die Anzahl der im Energiespeichersystem 1000 parallel geschalteten Energiespeichervorrichtungen 100 dar. Demnach ist es bei N parallel geschalteten, gleichartigen Energiespeichervorrichtungen 100 im Energiespeichersystem möglich, dass eine einzelne Energiespeichereinheit 120 Ströme, die die anderen N-1 Energiespeichereinheiten 120 während der asymmetrischen Voraufladung als jeweilige Entladeströme I' abgeben können, als Ladestrom I aufnimmt, ohne dass der Ladestrom I für diese Energiespeichereinheit 120 aus Sicherheitsgründen unterbrochen werden muss.

Die erste Verbindungsleitung 141 weist einen ersten Knoten K1, der mit dem ersten Pol 131 verbunden ist, und einen zweiten Knoten K2 auf, der mit dem ersten Anschluss 111 verbunden ist. Die zweite Verbindungsleitung 142 weist einen vierten Knoten K4 auf, der mit dem zweiten Pol 132 und dem zweiten Anschluss 112 verbunden ist. Der erste Anschluss und der zweite Anschluss 111, 112 können an einem Gehäuse (nicht gezeigt) der Energiespeichervorrichtung 100 nach außen hin freiliegend angeordnet sein und demnach als äußere Anschlüsse bezeichnet werden.

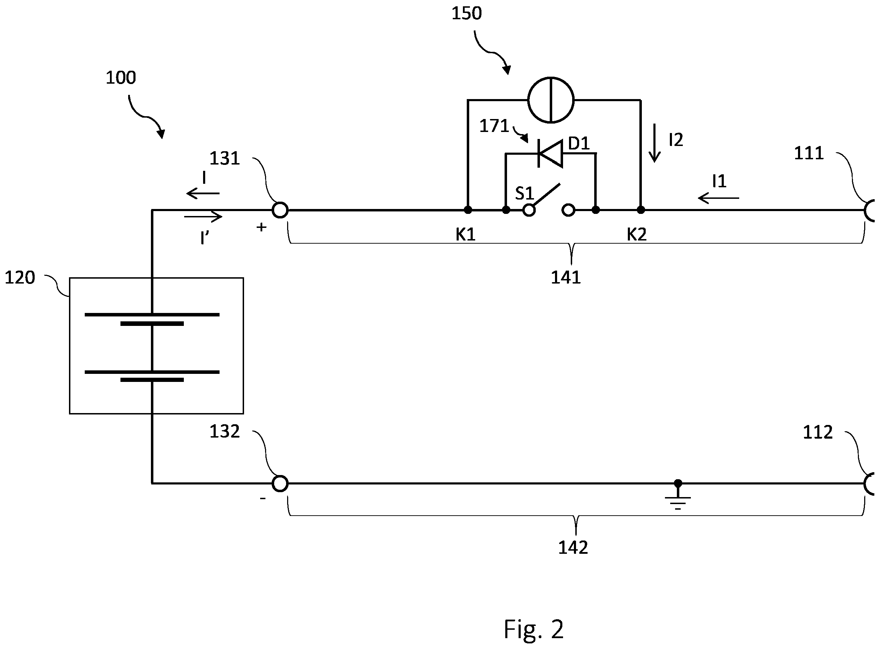

Figur 2 zeigt eine schematische Ansicht einer Energiespeichervorrichtung für ein Wasserfahrzeug gemäß Ausführungsformen der vorliegenden Offenbarung. Anhand von Figur 2 werden der Stromquellencharakter und der Spannungsquellencharakter der Voraufladeschaltung veranschaulicht.

In Figur 2 umfasst die erste Schalteinheit 171 einen ersten Schalter S1 und eine erste Diode D1. Der erste Schalter S1 ist mit dem ersten Knoten K1 und dem zweiten Knoten K2 verbunden und zum Schalten eines Stroms zwischen dem ersten Knoten K1 und dem zweiten Knoten K2 darüber eingerichtet. Die erste Diode D1 mit dem ersten Schalter S1 parallel verbunden, d.h. die erst Diode D1 ist ebenfalls mit dem ersten Knoten K1 und dem zweiten Knoten K2 verbunden. Die erste Diode D1 ist für einen Strom darüber vom ersten Knoten K1 zum zweiten Knoten K2 in Sperrrichtung angeordnet und ist für einen Strom darüber vom zweiten Knoten K2 zum ersten Knoten K1 in Durchlassrichtung angeordnet. Demnach ist die Anode der ersten Diode D1 mit dem zweiten Knoten K2 verbunden und die Kathode der ersten Diode D1 ist mit dem ersten Knoten K1 verbunden.

Wie in Figur 2 gezeigt, ist die erste Schalteinheit 171 eingerichtet, um einen Strom vom ersten Knoten K1 zum zweiten Knoten K2 über die erste Schalteinheit 171 zu schalten, insbesondere zu unterbrechen, aber kann aufgrund der Diode D1 nicht dazu eingerichtet sein, einen Strom vom zweiten Knoten K2 zum ersten Knoten K1 über die erste Schalteinheit 171 zu unterbrechen.

Die erste Schalteinheit 171 kann beispielsweise als Leistungsschalter, insbesondere als Leistungstransistor, beispielsweise als MOSFET, realisiert sein, der nur für Strom in einer Richtung (Vorwärtsrichtung) sperrfähig ist. Für einen Strom in der anderen Richtung, zu dieser Richtung entgegen gesetzten Richtung (Rückwärtsrichtung) kann der Leistungsschalter nicht sperrfähig sein. Der Leistungsschalter kann auch als rückwärts nicht sperrfähig bezeichnet werden.

Genauer gesagt kann der Leistungsschalter für einen Strom vom ersten Knoten K1 zum zweiten Knoten K2 (Vorwärtsrichtung) sperrfähig sein und demnach diesen Strom schalten, und für einen Strom vom zweiten Knoten K2 zum ersten Knoten K1 (Rückwärtsrichtung) nicht sperrfähig sein und kann demnach diesen Strom nicht unterbrechen. In diesem Fall wird die Diode D1 vorteilhafterweise durch die parasitäre Diode des Leistungstransistors bzw. MOSFETs gebildet.

Demnach kann ein Strom I1 vom ersten Anschluss 111 zum zweiten Knoten K2 und vom zweiten Knoten K2 über die erste Schalteinheit 171 und ggf. über die Voraufladeschaltung 150 zum ersten Knoten K1 im Wesentlichen unbegrenzt fließen. Von dort fließt der Strom weiter zum ersten Pol 131 und zur Energiespeichereinheit 120 als Ladestrom I zum Laden der Energiespeichereinheit 120. Somit wird dieser Ladestrom I der Energiespeichereinheit 120 durch die Voraufladeschaltung 50 nicht begrenzt.

Andererseits fließt ein Entladestrom I' zum Entladen der Energiespeichereinheit 120 von der Energiespeichereinheit über den ersten Pol 131 zum ersten Knoten K1 und von dort über die Voraufladeschaltung 150 als Strom I2 zum zweiten Knoten K2 und zum ersten Anschluss 111. Die Voraufladeschaltung 150 kann den Strom I2 und damit auch den Entladestrom I' begrenzen. Die Voraufladeschaltung 150 wirkt in dieser Hinsicht als Stromquelle. Hier kann der Entladestrom I' der Energiespeichereinheit 120 durch die Voraufladeschaltung 150 auf einen vorgegebenen Entladestrom-Grenzwert begrenzt werden. Die Voraufladeschaltung 150 kann gemäß Ausführungsformen als geregelte bzw. getaktete Stromquelle ausgestaltet sein.

Die Voraufladeschaltung 150 ermöglicht demnach eine Strombegrenzung für einen Entladestrom I' der Energiespeichereinheit 120 und/oder keine oder eine wesentlich höhere Strombegrenzung einen Ladestrom I der Energiespeichereinheit 120.

Figur 3 zeigt eine schematische Ansicht einer Energiespeichervorrichtung für ein Wasserfahrzeug gemäß Ausführungsformen der vorliegenden Offenbarung. Die in Figur 3 gezeigte Energiespeichervorrichtung entspricht der mit Bezug auf Figur 1 beschriebenen Energiespeichervorrichtung und zeigt weitere Details davon. Die Steuereinheit 160 ist in Figur 3 nicht gezeigt.

Hier umfasst die Voraufladeschaltung 150 eine dritte Verbindungsleitung 143 zwischen dem ersten Knoten K1 und dem zweiten Knoten K2, mit einem dritten Knoten K3 und eine Induktivität L zwischen dem dritten Knoten K3 und dem zweiten Knoten K2. Die Voraufladeschaltung 150 umfasst ferner eine vierte Verbindungsleitung 144 zwischen dem dritten Knoten K3 und dem vierten Knoten K4, und eine Freilaufdiode D4, die in der vierten Verbindungsleitung 144 angeordnet ist und für einen Strom I4 vom dritten Knoten K3 zum vierten Knoten K4 in Sperrrichtung angeordnet ist und die für einen Strom vom vierten Knoten K4 zum dritten Knoten K3 in Durchlassrichtung angeordnet ist. Demnach umfasst die dritte Verbindungsleitung 143 ein erstes Ende, das mit dem ersten Knoten K1 verbunden oder verbindbar ist, und ein zweites Ende, das mit dem zweiten Knoten K2 verbunden ist oder verbindbar ist. Der dritte Knoten K3 ist also zwischen dem ersten Ende und dem zweiten Ende der dritten Verbindungsleitung 143 angeordnet und die Induktivität L ist zwischen dem dritten Knoten K3 und dem zweiten Ende der dritten Verbindungsleitung 143 angeordnet. Die vierte Verbindungsleitung 144 umfasst also ein erstes Ende, das mit dem dritten Knoten K3 verbunden ist, und ein zweites Ende, das mit vierten Knoten K4 verbunden oder verbindbar ist. Die Freilaufdiode D4 ist demnach in der vierten Verbindungsleitung 144 zwischen dem ersten Ende und dem zweiten Ende der vierten Verbindungsleitung 144 angeordnet und für einen Strom vom zweiten Ende der vierten Verbindungsleitung 144 zum dritten Knoten K3 bzw. zum ersten Ende der vierten Verbindungsleitung 144 in Durchlassrichtung angeordnet und ist für einen Strom vom dritten Knoten K3 bzw. vom ersten Ende der vierten Verbindungsleitung 144 zum zweiten Ende der vierten Verbindungsleitung 144 in Sperrrichtung angeordnet.

Die Voraufladeschaltung 150 umfasst ferner eine dritte Schalteinheit 173. Die dritte Schalteinheit 173 ist in der dritten Verbindungsleitung 143 zwischen dem ersten Knoten K1 bzw. dem ersten Ende der dritten Verbindungsleitung 143 und dem dritten Knoten K3 angeordnet, d.h. sie ist mit dem ersten Knoten K1 und dem dritten Knoten K3 verbunden. Die dritte Schalteinheit 173 ist zum Schalten eines Stroms vom ersten Knoten K1 bzw. vom ersten Ende der dritten Verbindungsleitung 143 zum dritten Knoten K3 eingerichtet. Die erste Schalteinheit 171 ist demnach mit der dritten Verbindungsleitung 173 mit der dritten Schalteinheit 173 und der Induktivität L parallel geschaltet. Die Induktivität L kann durch eine Spule oder ähnliches realisiert sein.

Die Energiespeichervorrichtung 100 umfasst ferner eine zweite Schalteinheit 172. Die zweite Schalteinheit 172 kann auch als zweiter Hauptschalter bezeichnet werden. Die zweite Schalteinheit 172 ist in der ersten Verbindungsleitung 141 zwischen dem ersten Knoten K1 und dem ersten Pol 131 angeordnet, d.h. sie ist mit dem ersten Knoten K1 und dem ersten Pol 131 verbunden. Die zweite Schalteinheit 172 zum Schalten eines Stroms vom ersten Knoten K1 zum ersten Pol 131 eingerichtet.

Die Anordnung der zweiten Schalteinheit 172 ist nicht auf die Anordnung der Figur 2 beschränkt. Beispielsweise kann die zweite Schalteinheit 172 in der zweiten Verbindungsleitung 142 zwischen dem zweiten Pol 132 und dem vierten Knoten K4 angeordnet und zum Schalten eines Stroms vom zweiten Pol 132 zum vierten Knoten K4 eingerichtet sein.

Die Steuereinheit 160, die in Figur 3 nicht gezeigt ist, ist eingerichtet, die erste Schalteinheit 171 und die dritte Schalteinheit 173 zu steuern, und kann insbesondere eingerichtet sein, die erste Schalteinheit 171 und die dritte Schalteinheit 173 zu schalten, um die Stärke des Entladestroms I' für die Energiespeichereinheit 120 über den ersten Pol 131 und weiter zum ersten Knoten K1 auf einen vorgegebenen Entladestrom-Schwellwert zu begrenzen. Die Steuereinheit 160 ist ferner eingerichtet, um die zweite Schalteinheit 172 zu schalten.

Die zweite Schalteinheit 172 und die dritte Schalteinheit 173 sind analog zur ersten Schalteinheit 171 aufgebaut.

Hier umfasst die zweite Schalteinheit 172 einen zweiten Schalter S2 und eine zweite Diode D2. Der zweite Schalter S2 ist mit dem ersten Knoten K1 und dem ersten Pol 131 verbunden und zum Schalten eines Stroms zwischen dem ersten Knoten K1 und dem ersten Pol 131 eingerichtet. Die zweite Diode D2 ist mit dem zweiten Schalter S2 parallel verbunden, d.h. die zweite Diode D2 ist ebenfalls mit dem ersten Knoten K1 und dem ersten Pol 131 verbunden. Die zweite Diode D2 ist für einen Strom darüber vom ersten Knoten K1 zum ersten Pol 131 in Sperrrichtung angeordnet und ist für einen Strom darüber vom ersten Pol 131 zum ersten Knoten K1 in Durchlassrichtung angeordnet. Durch diese Realisierung ist die zweite Schalteinheit 172 zum Schalten eines Stroms I3 vom ersten Knoten K1 zum ersten Pol 131 eingerichtet.

Hier umfasst die dritte Schalteinheit 173 einen dritten Schalter S3 und eine dritte Diode D3. Der dritte Schalter S3 ist mit dem ersten Knoten K1 und dem dritten Knoten K3 verbunden und zum Schalten eines Stroms zwischen dem ersten Knoten K1 und dem dritten Knoten K3 eingerichtet. Die dritte Diode D3 ist mit dem dritten Schalter S3 parallel verbunden, d.h. die dritte Diode D3 ist ebenfalls mit dem ersten Knoten K1 und dem dritten Knoten K3 verbunden. Die dritte Diode D3 ist für einen Strom darüber vom ersten Knoten K1 zum dritten Knoten K3 in Sperrrichtung angeordnet und ist für einen Strom darüber dritten Knoten K3 zum ersten Knoten K1 in Durchlassrichtung angeordnet. Durch diese Realisierung ist die dritte Schalteinheit 173 zum Schalten eines Stroms vom ersten Knoten K1 zum dritten Knoten K3 eingerichtet.

Ebenso wie die erste Schalteinheit 171 können die zweite Schalteinheit 172 und die dritte Schalteinheit 173 als Leistungsschalter, insbesondere als Leistungstransistor, vorzugsweise als MOSFET, ausgebildet sein. Vorzugsweise können entsprechend die zweite Diode D2 und die dritte Diode D3 ebenfalls durch die parasitäre Diode des jeweiligen Leistungsschalters gebildet sein. Hier kann für die zweite Schalteinheit 172 der Leistungsschalter für einen Strom vom ersten Knoten K1 zum ersten Pol 131 (Vorwärtsrichtung) sperrfähig sein und demnach diesen Strom schalten, und der Leistungsschalter kann für einen Strom vom ersten Pol 131 zum ersten Knoten K1 (Rückwärtsrichtung) nicht sperrfähig sein und kann demnach diesen Strom nicht unterbrechen. Ebenfalls kann für die dritte Schalteinheit 173 der Leistungsschalter für einen Strom vom ersten Knoten K1 zum dritten Knoten K3 (Vorwärtsrichtung) sperrfähig sein und demnach diesen Strom schalten, und der Leistungsschalter kann für einen Strom vom dritten Knoten K3 zum ersten Knoten K1 (Rückwärtsrichtung) nicht sperrfähig sein und kann demnach diesen Strom nicht unterbrechen.

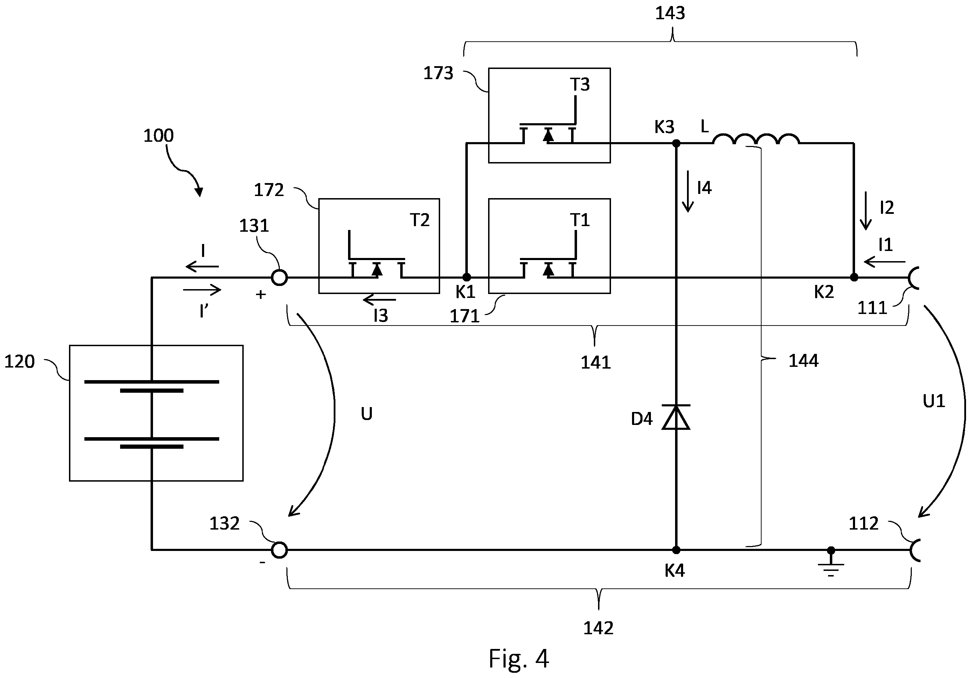

Der Fall, dass die ersten bis dritten Schalteinheiten 171, 172, 173 als Leistungsschalter, insbesondere als MOSFET, ausgebildet sind, ist in Figur 4 veranschaulicht.

Durch Öffnen der zweiten Schalteinheit 172 kann der Ladestrom I unterbrochen und bei Bedarf abgeschaltet werden. Demnach kann die Steuereinheit 160 mittels der zweiten Schalteinheit 172 den Ladestrom I vom ersten Knoten K1 zum ersten Pol 131 und zur Energiespeichereinheit 120 schalten bzw. steuern.

Beispielsweise kann die Steuereinheit 160 die zweite Schalteinheit 172 derart schalten, insbesondere durch wiederholtes und abwechselndes Öffnen und Schließen der zweiten Schalteinheit 172, dass ein Maximalwert der Stromstärke des Ladestroms I oder ein zeitlicher Mittelwert der Stromstärke gleich oder kleiner als der vorgegebene Ladestrom-Schwellwert ist. Dadurch kann der Ladestrom I auf den vorgegebenen Ladestrom-Schwellwert begrenzt werden.

Auch kann durch Öffnen der ersten Schalteinheit 171 und der dritten Schalteinheit 173 der Entladestrom I' unterbrochen werden.

Demnach kann die Steuereinheit 160 mittels der ersten Schalteinheit 171 und der dritten Schalteinheit 173 den Entladestrom I' von der Energiespeichereinheit 120 über den ersten Pol 131 zum ersten Knoten K1 schalten bzw. steuern. Wie nachfolgend beschrieben ist, kann durch Schalten der ersten Schalteinheit 171 und/oder durch Schalten der dritten Schalteinheit 173 der Entladestrom I' auf einen vorgegebenen Entladestrom-Schwellwert begrenzt werden.

Die Energiespeichervorrichtung 100 kann ferner nicht gezeigte Messvorrichtungen für Ströme und Spannungen umfassen. Die Messvorrichtungen können eingerichtet sein, die jeweils gemessenen Ströme bzw. Spannungen an die Steuereinheit 160 zu übertragen. Die Steuereinheit 160 kann die gemessenen Ströme und Spannungen verwenden, um nachfolgend beschriebene Steuerverfahren durchzuführen.

Beispielsweise kann eine Messvorrichtung zum Messen eines Stroms I1 vom ersten Anschluss 111 zum zweiten Knoten K2, eine Messvorrichtung zum Messen eines Stroms I2 vom dritten Knoten K3 zum zweiten Knoten K2, eine Messvorrichtung zum Messen eines Stroms I3 vom ersten Knoten K1 zum ersten Pol 131, eine Messvorrichtung zum Messen eines Stroms I4 vom dritten Knoten K3 zum vierten Knoten K4, eine Messvorrichtung zum Messen des Ladestroms I und/oder des Entladestroms I', eine Messvorrichtung zum Messen der Spannung U der Energiespeichervorrichtung 120 und eine Messvorrichtung zum Messen der Spannung U1 an den Anschlüssen vorhanden sein. Das Messen eines Stroms kann das Bestimmen umfassen, ob ein Strom in der entsprechenden Richtung vorhanden ist, insbesondere ob eine Stromstärke davon größer als ein vorgegebener unterer Schwellwert, beispielsweise 0 A, ist. Das Messen des Stroms kann auch das Messen einer Stromstärke umfassen. Das Messen und Übertragen können wiederholt und/oder kontinuierlich erfolgen.

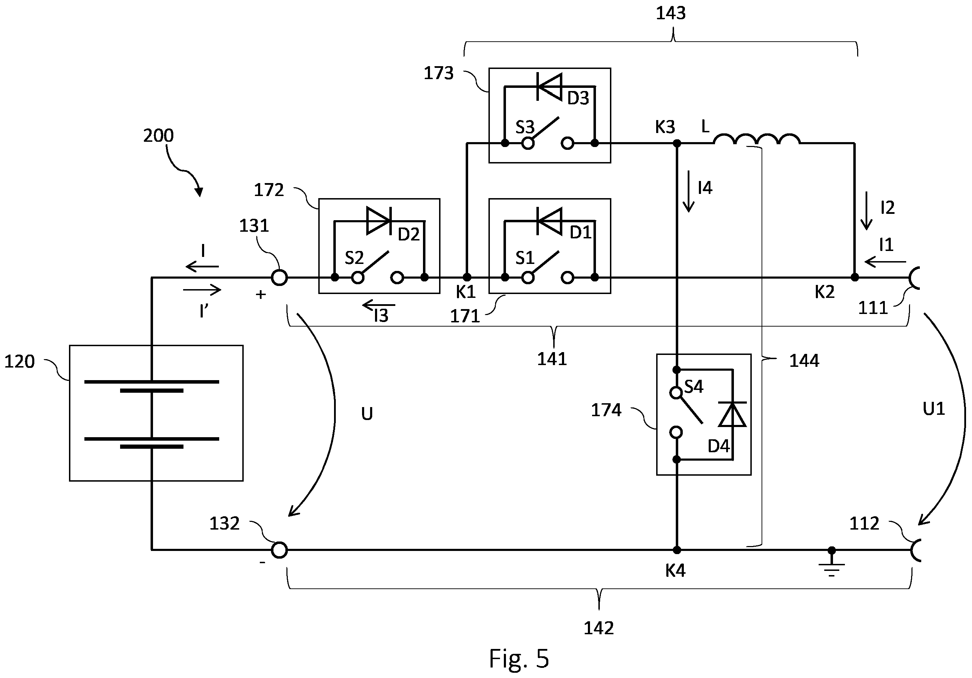

Figur 5 zeigt eine schematische Ansicht einer Energiespeichervorrichtung für ein Wasserfahrzeug gemäß zweiten Ausführungsformen der vorliegenden Offenbarung. Die in Figur 5 gezeigte Energiespeichervorrichtung 200 entspricht der mit Bezug auf Figur 3 gezeigten Energiespeichervorrichtung 100 bis auf die nachfolgend beschriebenen Unterschiede.

Hier umfasst die Energiespeichervorrichtung 200 eine vierte Schalteinheit 174, die in der vierten Verbindungsleitung 144 zwischen dem vierten Knoten K4 und dem dritten Knoten K3 angeordnet ist. D.h. die vierte Schalteinheit 174 ist mit dem vierten Knoten K4 und dem dritten Knoten K3 verbunden. Die vierte Schalteinheit 174 ist in der vierten Verbindungsleitung 144 zwischen dem ersten Ende und dem zweiten Ende der vierten Verbindungsleitung 144 angeordnet und zum Schalten eines Stroms vom dritten Knoten K3 zum zweiten Ende der vierten Verbindungsleitung eingerichtet 144. Die vierte Schalteinheit 174 ist zum Schalten eines Stroms vom dritten Knoten K3 zum vierten Knoten K4 eingerichtet. Hier ist die Steuereinheit 160 ferner eingerichtet, um die vierte Schalteinheit 174 zu schalten.

Gemäß der in Figur 5 gezeigten Ausführungsform umfasst die vierte Schalteinheit 174 einen vierten Schalter S4 und die Freilaufdiode D4. Der vierte Schalter S4 ist mit dem dritten Knoten K3 und dem vierten Knoten K4 verbunden und zum Schalten eines Stroms darüber zwischen dem dritten Knoten K3 und dem vierten Knoten K4 eingerichtet. Die Freilaufdiode D4 ist mit dem vierten Schalter S4 parallel verbunden, d.h. die Freilaufdiode D4 ist ebenfalls mit dem dritten Knoten K3 und dem vierten Knoten K4 verbunden. Die Freilaufdiode D4 ist für einen Strom darüber vom dritten Knoten K3 zum vierten Knoten K4 in Sperrrichtung angeordnet und ist für einen Strom darüber vom vierten Knoten K3 zum dritten Knoten K3 in Durchlassrichtung angeordnet. Durch diese Realisierung ist die vierte Schalteinheit 174 zum Schalten des Stroms I4 vom dritten Knoten K3 zum vierten Knoten K4 eingerichtet.

Ebenso wie die anderen Schalteinheiten kann die vierte Schalteinheit 174 als Leistungsschalter, insbesondere als Leistungstransistor, vorzugsweise als MOSFET, ausgebildet sein. Hier kann die Freilaufdiode D4 durch die parasitäre Diode des Leistungsschalters gebildet sein. Demnach kann der Leistungsschalter für den Strom I4 vom dritten Knoten K3 zum vierten Knoten K4 (Vorwärtsrichtung) sperrfähig sein und demnach diesen Strom schalten, und der Leistungsschalter kann für einen Strom vom vierten Knoten K4 zum dritten Knoten K3 (Rückwärtsrichtung) nicht sperrfähig sein und kann demnach diesen Strom nicht unterbrechen.

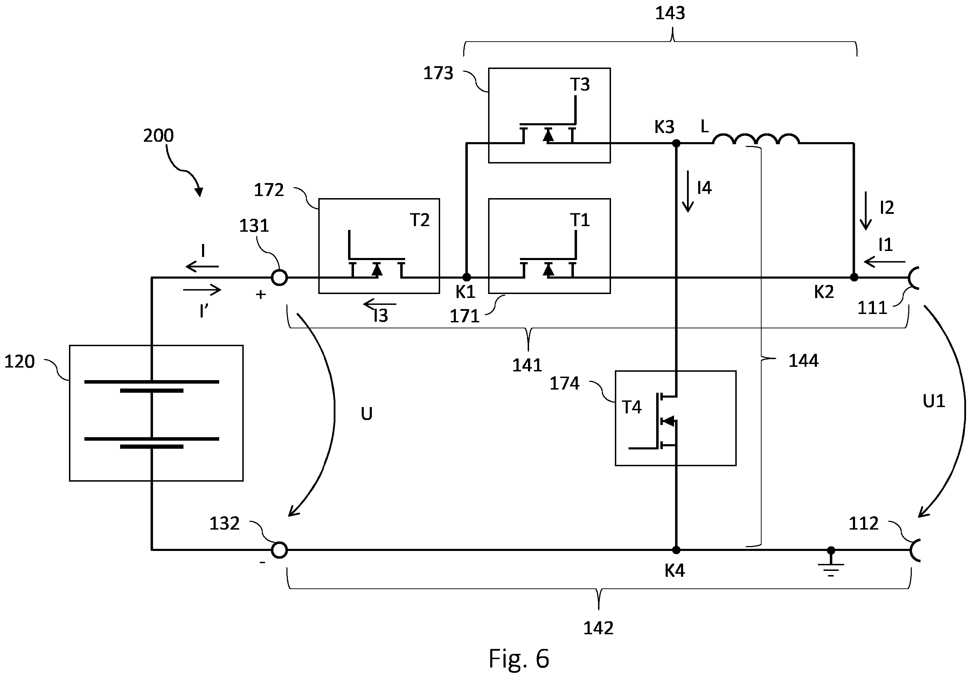

Der Fall, dass die ersten bis vierten Schalteinheiten 171, 172, 173 und 174 jeweils als Leistungsschalter, insbesondere MOSFET, ausgebildet sind, ist in Figur 6 veranschaulicht.

Die Steuereinheit 160 ist eingerichtet, um die ersten bis vierten Schalteinheiten 171, 172, 173, 174 zu schalten, um Steuerverfahren für die Energiespeichervorrichtung gemäß Ausführungsformen der vorliegenden Offenbarung durchzuführen.

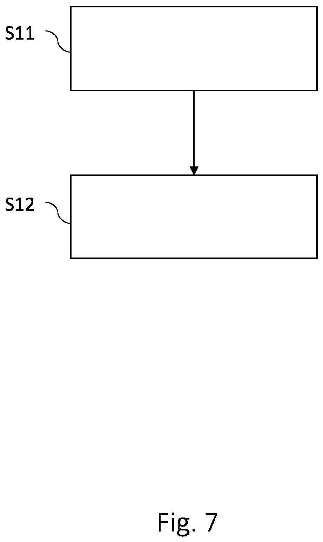

Figur 7 zeigt ein Vorauflade-Steuerverfahren gemäß Ausführungsformen der vorliegenden Offenbarung.

Das Vorauflade-Steuerverfahren kann für die mit Bezug auf Figur 1 bis Figur 6 gezeigte Energiespeichervorrichtungen durchgeführt werden. Das Vorauflade-Steuerverfahren kann insbesondere für mehrere, vorzugsweise alle, parallel verbundenen Energiespeichervorrichtungen eines Energiespeichersystems gemäß Ausführungsformen der vorliegenden Offenbarung gleichzeitig durchgeführt werden. Mit Bezug auf die in Figur 5 und Figur 6 gezeigten Ausführungsformen der Energiespeichervorrichtung 200 sollte die vierte Schalteinheit 174 hierbei geöffnet sein. Bevorzugt wird das Vorauflade-Steuerverfahren beim Einschalten des Energiespeichersystems, das beispielsweise als Batteriebank ausgebildet ist, durchgeführt.

Hier schließt die Steuereinheit 160 in einem ersten Schritt S11 die dritte Schalteinheit 173 und die zweite Schalteinheit 172. Hier kann die Steuereinheit 160 die erste Schalteinheit 171 zunächst öffnen bzw. geöffnet lassen.

Hierdurch wird sowohl ein Entladestrom I' als auch ein Ladestrom I für die Energiespeichereinheit 120 ermöglicht. Ob ein Entladestrom I' oder ein Ladestrom I für eine jeweilige Energiespeichereinheit 120 tatsächlich auftritt, ist vom Ladungszustand der Energiespeichereinheit 120 relativ zum Ladungszustand der Energiespeichereinheit 120 der anderen Energiespeichervorrichtungen im Energiespeichersystem abhängig.

Hierbei fließt für eine Energiespeichereinheit 120 mit einem höheren Ladungszustand im Vergleich zu den anderen Energiespeichereinheiten 120 und damit höheren Spannung U ein Entladestrom I' von der Energiespeichereinheit 120 über den ersten Pol 131 und weiter über die zweite Schalteinheit 172, den ersten Knoten K1, die geschlossene dritte Schalteinheit 173, den dritten Knoten K3 und den zweiten Knoten K2 zum ersten Anschluss 111. Hier ist I2 im Wesentlichen gleich I'. Dieser Entladestrom I' kann zum Laden der anderen Energiespeichereinheiten 120 mit einem niedrigeren Ladungszustand dienen.

Ebenso fließt für eine Energiespeichereinheit 120 mit einem niedrigeren Ladungszustand im Vergleich zu den anderen Energiespeichereinheiten 120 und damit Spannung U ein Strom I1 vom ersten Anschluss 111 zum Knoten K2. Hier teilt sich der Strom gemäß den Impedanzen der Verbindungsleitungen oder Strompfade zwischen K2 und K1 über die dritte Schalteinheit 173 bzw. über die erste Schalteinheit 171 auf. Der Strom fließt weiter von K1 zum ersten Pol 131 und weiter als Ladestrom I für die Energiespeichereinheit 120. Demnach ist I1 im Wesentlichen gleich I. Für den Fall von lediglich zwei parallel geschalteten Energiespeichervorrichtungen 120 ist zudem der Ladestrom I der einen Energiespeichereinheit 120 gleich dem Entladestrom I' der anderen Energiespeichereinheit 120.

Die Steuereinheit 160 führt danach in einem Schritt S12 Vorauflade-Steuerverfahren gemäß den nachfolgend beschriebenen Ausführungsformen durch.

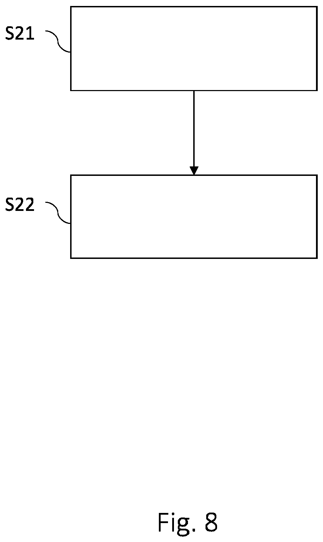

Figur 8 zeigt ein Vorauflade-Steuerverfahren gemäß einer ersten Ausführungsform der vorliegenden Offenbarung.

Das hier gezeigte Vorauflade-Steuerverfahren kann von der Steuereinheit im Schritt S12 von Figur 7 durchgeführt werden. Hier kann die Steuereinheit 160 nach dem Schritt S11 von Figur 7 bestimmen, ob ein Strom I1 vom ersten Anschluss 111 zum zweiten Knoten K2 fließt, d.h. ob ein Strom vom ersten Anschluss 111 zum zweiten Knoten K2 vorhanden ist. Mit anderen Worten bestimmt die Steuereinheit 160, ob die Stromstärke des Stroms I1 größer als ein vorgegebener unterer Schwellwert ist, beispielsweise 0 A. Alternativ kann die Steuereinheit 160 bestimmen, ob ein Ladestrom I vorhanden ist, oder ob ein Strom mit entgegen gesetzter Richtung zum Strom I2 vorhanden ist. Dies ist insbesondere dann der Fall, wenn die Energiespeichereinheit 120 im Verhältnis zu den anderen Energiespeichereinheiten 120 im Energiespeichersystem einen niedrigeren Ladungszustand und damit eine niedrigere Spannung U aufweist. In diesem Fall wird die Energiespeichereinheit 120 geladen.

Wenn bestimmt wurde, dass der Strom I1 bzw. der Ladestrom I vorhanden ist, schließt die Steuereinheit 160 im Schritt S21 die erste Schalteinheit 171. Wenn die erste Schalteinheit 171 und die dritte Schalteinheit 173 als MOSFET ausgebildet sind, kommutiert der vom Knoten K2 kommende Strom I1 weitestgehend über die erste Schalteinheit 171, d.h. auf der ersten Verbindungsleitung 141 zwischen dem zweiten Knoten K2 und dem ersten Knoten K1. Dies liegt an der niedrigeren Impedanz des MOSFET-Kanals der eingeschalteten Schalteinheit 171 in der ersten Verbindungsleitung 141 zwischen dem zweiten Knoten K2 und dem ersten Knoten K1 im Vergleich zu jener der dritten Verbindungsleitung 143.

In einem weiteren optionalen Schritt S22 kann die Steuereinheit 160 unmittelbar nach dem Schließen der ersten Schalteinheit 171 die dritte Schalteinheit 173 öffnen. Hierbei kann sich die in der Induktivität L gespeicherte Energie über die dritte Diode D3, die beispielsweise von einem MOSFET gebildet ist, abbauen. Durch das hier beschriebene Vorauflade-Steuerverfahren kann die Energiespeichereinheit 120 mit einem Ladestrom I mit relativ großer Stromstärke oder mit einem unbegrenzten Ladestrom I geladen werden.

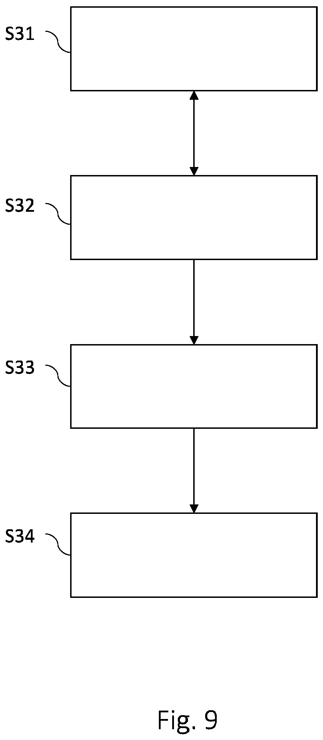

Figur 9 zeigt ein Vorauflade-Steuerverfahren gemäß einer zweiten Ausführungsform der vorliegenden Offenbarung. Das hier gezeigte Vorauflade-Steuerverfahren kann von der Steuereinheit 160 im Schritt S12 von Figur 7 durchgeführt werden.

Hier öffnet die Steuereinheit 160 im Schritt S31 die dritte Schalteinheit 173. In einem nachfolgenden Schritt S32 schließt die Steuereinheit 160 die dritte Schalteinheit 173.

Gemäß Ausführungsformen kann die Steuereinheit 160 nach dem Schritt S11 von Figur 7 zunächst bestimmen, ob ein Strom I2 vom dritten Knoten K3 zum zweiten Knoten K2 fließt, d.h. ob ein Strom I2 vom dritten Knoten K3 zum zweiten Knoten K2 vorhanden ist. Mit anderen Worten bestimmt die Steuereinheit 160, ob die Stromstärke des Strom I2 gleich oder größer als ein vorgegebener unterer Schwellwert, beispielweise 0 A, ist. Alternativ kann die Steuereinheit 160 bestimmen, ob der Entladestrom I' vorhanden ist oder ob ein Strom mit entgegen gesetzter Richtung zum Strom I1 vorhanden ist. Dies ist insbesondere dann der Fall, wenn die Energiespeichereinheit 120 im Verhältnis zu den anderen Energiespeichereinheiten 120 im Energiespeichersystem einen höheren Ladungszustand und damit Spannung U aufweist. In diesem Fall wird die Energiespeichereinheit 120 entladen. Hier kann die Steuereinheit 160 die Schritte S31 und S32 durchführen, wenn bestimmt wurde, dass ein Strom I2 vom dritten Knoten K3 zum zweiten Knoten K2 fließt.

Wenn die dritte Schalteinheit 173 geöffnet wird, wird ein Stromfluss über die dritte Schalteinheit 173 unterbrochen. Damit wird auch der Entladestrom I' unterbrochen bzw. 0 A. Der Strom I2 zum Zeitpunkt des Öffnens der Schalteinheit 173 kann über die vierte Verbindungsleitung 144 und die Freilaufdiode D4 kommutieren, woraufhin der Strom I2 sinkt. Wenn die Steuereinheit 160 die dritte Schalteinheit 173 wieder schließt, kann die Stromstärke des Stroms I2 und damit auch die Stromstärke des Entladestroms I' wieder ansteigen.

Durch abwechselndes Öffnen und Schließen der dritten Schalteinheit 173 ist es also möglich, die Stromstärke des Entladestroms I' zu steuern. Beispielsweise kann ein Maximalwert oder ein zeitlicher Mittelwert der Stromstärke gesteuert und insbesondere auf den vorgegebenen Entladestrom-Schwellwert begrenzt werden.

Die Steuereinheit 160 ist gemäß Ausführungsformen eingerichtet, um die dritte Schalteinheit 173 wiederholt und abwechselnd zu öffnen und zu schließen, also wiederholt und abwechselnd schalten, was in Figur 9 durch einen Doppelpfeil zwischen den Schritten S31 und S32 veranschaulicht ist. Hierdurch kann die Steuereinheit 160 die Stromstärke des Entladestroms I' auf den Entladestrom-Schwellwert begrenzen. Die Steuereinheit 160 kann hierdurch insbesondere einen zeitlichen Mittelwert oder einen Maximalwert der Stromstärke des Entladestroms I' auf den Entladestrom-Schwellwert begrenzen.

Insbesondere kann die Steuereinheit ein Pulsweitenmodulationsverfahren zum abwechselnden und wiederholten Schalten der dritten Schalteinheit 173 durchführen. Hier gibt eine Öffnungsdauer der dritten Schalteinheit 173 eine Zeitdauer zwischen dem Öffnen und dem Schließen an, also die Zeitdauer, während der die dritte Schalteinheit 173 geöffnet ist. Eine Schließdauer der dritten Schalteinheit 173 gibt eine Zeitdauer zwischen dem Schließen und dem Öffnen an, also die Zeitdauer, während der die dritte Schalteinheit 173 geschlossen ist. Ein Kehrwert der Summe der Öffnungsdauer und der Schließdauer kann als Schaltfrequenz definiert sein. Ein Verhältnis zwischen der Schließdauer und der Summe der Öffnungsdauer und der Schließdauer kann als Tastgrad oder Tastverhältnis des Pulsweitenmodulationsverfahrens definiert sein. Ein großes Tastverhältnis kann einer großen Pulsweite entsprechen und umgekehrt. Eine Pulsweite kann der Schließdauer entsprechen. Mit Bezug auf das in Figur 9 beschriebene Vorauflade-Steuerverfahren werden die Schaltfrequenz und das Tastverhältnis auch als Vorauflade-Schaltfrequenz bzw. Vorauflade-Tastverhältnis bezeichnet.

Die Schaltfrequenz, die Schließdauer, die Öffnungsdauer und/oder das Tastverhältnis können vorgegeben sein. Insbesondere können diese Parameter durch die Steuereinheit 160 vorgegeben oder eingestellt werden und/oder durch die Steuereinheit 160 verändert werden. Die Steuereinheit 160 kann eingerichtet sein, diese Parameter stufenförmig und/oder kontinuierlich zu verändern. Beispielsweise kann die Steuereinheit 160 das Tastverhältnis derart einstellen, dass der zeitliche Mittelwert oder Maximalwert der Stromstärke des Entladestroms I' und oder des Stroms I2 auf den Entladestrom-Schwellwert begrenzt wird.

Beispielsweise kann die Steuereinheit 160 das Tastverhältnis bzw. die Öffnungsdauer derart einstellen, dass die mittlere Stromstärke des Stroms I2 bzw. des Entladestroms I' zunächst ungefähr 20 A beträgt oder darauf begrenzt ist, anschließend ungefähr 15 A beträgt oder darauf begrenzt ist, und anschließend ungefähr 10 A beträgt oder darauf begrenzt ist. Demnach wird hier das Tastverhältnis und/oder die Schließdauer stufenförmig verringert.

Die Schaltfrequenz kann beispielsweise 100 kHz betragen. Hier kann die Steuereinheit 160 also einen linearen Begrenzungsregler implementieren.

Gemäß weiteren Ausführungsformen öffnet die Steuereinheit 160 die dritte Schalteinheit 173 im Schritt S31, wenn die Stromstärke des Entladestroms I', des Stroms I2 vom dritten Knoten K3 zum zweiten Knoten K2 oder des Stroms mit entgegengesetzter Richtung zum Strom I1 größer als ein vorgegebener erster Schwellwert ist oder diesen Schwellwert überschreitet. Der Strom I2 durch L kommutiert dann über die vierte Verbindungsleitung 144 und die Freilaufdiode D4, woraufhin der Strom I2 sinkt.

Anschließend schließt die Steuereinheit 160 die dritte Schalteinheit 173, wenn die Stromstärke gleich oder kleiner als ein vorgegebener zweiter Schwellwert ist oder diesen Schwellwert unterschreitet. Dadurch kann die Stromstärke des Stroms I2 bzw. des Entladestroms I' wieder ansteigen. Der zweite Schwellwert kann dabei gleich oder kleiner als der erste Schwellwert sein. Dadurch kann die Steuereinheit 160 ein Zweipunkt-Regelverfahren bzw. ein Hysterese-Regelverfahren durchführen. Hierbei kann der erste Schwellwert gleich oder größer als der Entladestrom-Schwellwert sein. Entsprechend kann der Maximalwert bzw. der zeitliche Mittelwert der Stromstärke des Entladestroms I' bzw. des Stroms I2 auf den Entladestrom-Schwellwert begrenzt werden.

Gemäß weiteren Ausführungsformen schließt die Steuereinheit 160 in einem Schritt S33 nach dem Schritt S32 die erste Schalteinheit 171, wenn die Stromstärke des Stroms I2 vom dritten Knoten K3 zum zweiten Knoten K2 und/oder des Entladestroms I' gleich oder kleiner als ein vorgegebener dritter Schwellwert ist oder diesen Schwellwert unterschreitet und/oder wenn eine Differenz der Spannung U an der Energiespeichereinheit 120 und der Spannung U1 an den Anschlüssen 111, 112 gleich oder kleiner als ein vorgegebener vierter Schwellwert ist oder diesen unterschreitet. Der dritte Schwellwert kann kleiner als der erste und/oder zweite Schwellwert sein.

In einem darauffolgenden Schritt S35 kann die Steuereinheit 160 die dritte Schalteinheit 173 unmittelbar nach dem Schließen der ersten Schalteinheit 171 öffnen. Die Steuereinheit 160 kann eingerichtet sein, die erste Schalteinheit 171 anschließend kontinuierlich geschlossen zu lassen, d.h. nicht mehr zu schalten. Die Steuereinheit 160 kann die dritte Schalteinheit 173 kontinuierlich geöffnet lassen, d.h. nicht mehr schalten.

Der vierte Schwellwert kann einer maximal zulässigen Spannungsdifferenz zwischen der Spannung U an der Energiespeichereinheit 120 und der Spannung U1 an den Anschlüssen 111, 112 entsprechen. Somit kann durch das Vorauflade-Steuerverfahren gemäß Ausführungsformen die erste Schalteinheit 171 als Hauptschalter entlastet werden. Solange der dritte Schwellwert nicht erreicht bzw. nicht unterschritten ist und/oder solange der vierte Schwellwert nicht erreicht bzw. unterschritten ist, wird der Entladestrom I' für die Energiespeichereinheit 120 über die Voraufladeschaltung 150, genauer gesagt über die dritte Verbindungsleitung 143 zwischen dem ersten Knoten K1 und dem dritten Knoten K3 geführt, wo er durch die dritte Schalteinheit 173 geschaltet werden kann. Dadurch kann die Stärke des Entladestroms I' auf einen vorgegebenen Entladestrom-Schwellwert begrenzt werden.

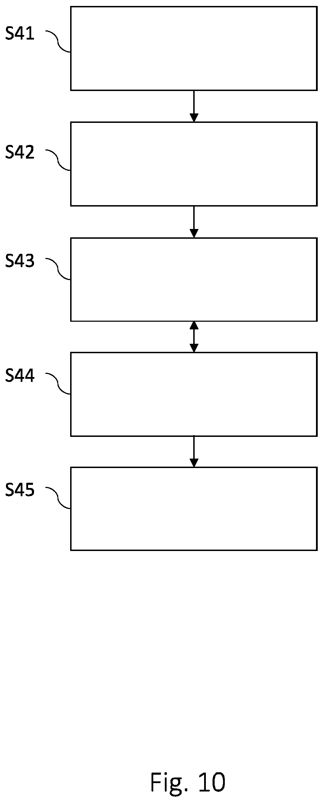

Figur 10 zeigt ein Lade-Steuerverfahren gemäß einer Ausführungsform der vorliegenden Offenbarung. Das Steuerverfahren kann für die mit Bezug auf Figur 5 und Figur 6 gezeigte Energiespeichervorrichtung durchgeführt werden. Das Lade-Steuerverfahren kann insbesondere für mehrere oder alle parallel verbundenen Energiespeichervorrichtungen eines Energiespeichersystems gemäß Ausführungsformen der vorliegenden Offenbarung gleichzeitig durchgeführt werden. Das Lade-Steuerverfahren kann auch als Boost-Verfahren oder Boost-Vorgang bezeichnet werden.

Das hier gezeigte Lade-Steuerverfahren kann als Teil oder während eines Ladevorgangs zum Laden der Energiespeichereinheit 120 durchgeführt werden. Der Ladevorgang kann durch eine externe Ladevorrichtung, die mit den Anschlüssen 111, 112 verbunden ist, durchgeführt werden. Der Ladevorgang kann ein CCCV-Ladevorgang sein.

Hier schließt die Steuereinheit 160 zunächst in einem optionalen ersten Schritt S41 die zweite Schalteinheit 172. Die Steuereinheit 160 kann in diesem Schritt auch die erste Schalteinheit 171 schließen. Das Schließen der ersten Schalteinheit 171 kann vor, gleichzeitig oder nach dem Schließen der zweiten Schalteinheit 172 erfolgen. Dadurch kann ein Strom I1, der von der externen Ladevorrichtung bereitgestellt wird, vom ersten Anschluss 111 zum zweiten Knoten K2 und von dort zum ersten Pol 131 fließen. Daraus ergibt sich ein Ladestrom I für die Energiespeichereinheit 120, d.h. der Ladestrom I entspricht im Wesentlichen dem Strom I1. Auch kann die Steuereinheit 160 die vierte Schalteinheit 174 öffnen. Ein Strom I4 über die vierte Verbindungsleitung 144 wird damit zunächst verhindert.

Hier kann die Steuereinheit 160 die dritte Schalteinheit 173 öffnen. Wenn wie mit Bezug auf Figur 8 diskutiert die erste und dritte Schalteinheit 171, 173 als MOSFET ausgebildet sind, kommutiert aufgrund der niedrigeren Impedanz des MOSFET-Kanals des eingeschalteten MOSFETS 171 der vom Knoten K2 kommende Strom I1 weitestgehend über die erste Schalteinheit 171, d.h. auf der ersten Verbindungsleitung 141 zwischen dem zweiten Knoten K2 und dem ersten Knoten K1. Die dritte Schalteinheit 173 kann aber auch geschlossen sein.

In einem optionalen zweiten Schritt S42 öffnet die Steuereinheit 160 die erste Schalteinheit 171. Dadurch wird bei den nachfolgenden Schritten ein Stromfluss über die erste Verbindungsleitung 141 vom ersten Knoten K1 zum zweiten Knoten K2 verhindert.

In einem dritten Schritt S43 schließt die Steuereinheit 160 die vierte Schalteinheit 174. Dadurch wird ein Strom I4 über die vierte Verbindungsleitung 144 vom Knoten K3 zum vierten Knoten K4 ermöglicht. Dabei ergibt sich ein Stromfluss vom ersten Anschluss 111 über den zweiten Knoten K2, die Induktivität L und den dritten Knoten K3 und weiter über die vierte Verbindungsleitung 144 zum vierten Knoten K4. Somit wird in dieser Phase Energie in der Induktivität L gespeichert.

Anschließend öffnet die Steuereinheit 160 im vierten Schritt S44 die vierte Schalteinheit 174. Der Strom vom Knoten K3 über die vierte Verbindungsleitung 144 zum vierten Knoten K4 wechselt dadurch zur dritten Verbindungsleitung 143 zwischen dem dritten Knoten K3 und dem ersten Knoten K1. Von dort fließt ein Strom I3 weiter zum ersten Pol 131 und weiter als Ladestrom I zur Energiespeichereinheit 120. Die von der Induktivität L gespeicherte Energie wird somit an die Energiespeichereinheit 120 abgegeben. Gleichzeitig wird die Spannung U an der Energiespeichereinheit 120 erhöht oder aufrechterhalten und die Stromstärke des Ladestroms I zum Laden der Energiespeichereinheit 120 wird erhöht oder aufrechterhalten.

Wenn die Schalteinheit 173 gemäß Ausführungsformen den dritten Schalter S3 und die dritte Diode D3 aufweist, und wenn die Schalteinheit 173 insbesondere als Leistungsschalter, beispielsweise MOSFET ausgebildet ist, wird die dritte Diode D3 nach dem Öffnen der vierten Schalteinheit 174 den Strom vom Knoten K3 übernehmen. Zur Minimierung von Verlusten kann die Steuereinheit 160 eingerichtet sein, um die dritte Schalteinheit 173 nach Öffnen der vierten Schalteinheit 174 zu schließen.

Die Steuereinheit 160 kann eingerichtet sein, um in einem optionalen fünften Schritt S45 die zweite Schalteinheit 172 zu öffnen. Dadurch wird der Ladestrom I für die Energiespeichereinheit 120 unterbrochen und das Ladeverfahren kann beendet werden. Vorzugsweise öffnet die Steuereinheit 160 die zweite Schalteinheit 172, wenn der SOC der Energiespeichereinheit 120 mehr als 99%, annähernd oder im Wesentlichen 100% erreicht hat und/oder wenn die Spannung U an der Energiespeichereinheit 120 einen vorgegebenen Wert erreicht hat. Wenn der Ladestrom I für die Energiespeichereinheit 120 unterbrochen wird, kann die durch die externe Ladevorrichtung festgestellt werden und die externe Ladevorrichtung kann den Ladevorgang beenden.

Gemäß Ausführungsformen kann die Steuereinheit 160 die erste Schalteinheit 171 gemäß Schritt S42 öffnen und die vierte Schalteinheit 174 gemäß den Schritten S43 und S44 erstmalig schalten, wenn der Strom I1 vom ersten Anschluss 111 zum zweiten Knoten K2 und/oder wenn der Ladestrom I gleich oder kleiner als ein Booster-Schwellwert ist oder den Booster-Schwellwert unterschreitet und/oder wenn die Spannung U1 an den Anschlüssen 111, 112 und/oder die Spannung U an der Energiespeichereinheit 120 größer als ein vorgegebener Lade-Spannungsschwellwert ist.

Beim Ladevorgang durch die externe Ladevorrichtung kann durch das Schalten der vierten Schalteinheit 174 die Spannung U an der Energiespeichereinheit 120 aufrechterhalten oder erhöht werden. Ebenfalls kann dadurch die Stromstärke des Ladestroms I für die Energiespeichereinheit 120 aufrechterhalten oder erhöht werden. Demnach kann die Voraufladeschaltung 150 hier als Aufwärtswandler oder Boost Converter betrieben werden.

Dadurch kann während eines Ladevorgangs der Energiespeichereinheit 120 durch die externe Ladevorrichtung sichergestellt werden, dass die Energiespeichereinheit 120 bis zum einem SOC von 100 % geladen wird. Zudem kann der Boost Converter einfach realisiert werden, da die Freilaufdiode D4 lediglich durch die parasitäre Diode der vierten Schalteinheit 174, insbesondere eines Leistungstransistors wie eines MOSFETS, zu realisieren und die Steuereinheit 160 dafür einzurichten ist, die vierte Schalteinheit 174 zu schalten.

Die Energiespeichervorrichtung 200 kann durch die Voraufladeschaltung 150 somit eine Art Präzisions-Schluss-Ladung der Energiespeichereinheit 120 nach eigenem Bedarf durchführen. Dadurch kann unabhängig von der Installationsart zuverlässig der angestrebte SOC der Energiespeichereinheit 120 von 100 % erreicht werden. Somit kann eine externe Ladevorrichtung zum Laden der Energiespeichervorrichtung 200 mit negativer Toleranz verwendet werden. "Negative Toleranz" bedeutet hier, dass die externe Ladevorrichtung bereits dann von der Konstantspannungsphase in die Konstantstromphase übergeht, wenn die Spannung U1 an den Anschlüssen 111, 112 bzw. einer Spannung U an der Energiespeichereinheit 120 einen Wert erreicht, der unterhalb der eigentlichen Ladeschlussspannung der Energiespeichereinheit 120 liegt. Dieser Wert kann auch als "interne Ladeschlussspannung der externen Ladevorrichtung" bezeichnet werden. Beispielsweise kann eine Ladeschlussspannung der Energiespeichereinheit 120 bei 30 V liegen, die interne Ladeschlussspannung der externen Ladevorrichtung kann bei 29 V liegen, und der Lade-Spannungsschwellwert, bei dem die Voraufladeschaltung 150 mit dem Schalten der vierten Schalteinheit 174 beginnt, kann bei 28 V liegen.

Eine Kommunikation der Energiespeichervorrichtung 200 mit der Ladevorrichtung ist nicht notwendig. Es können externe Ladevorrichtungen beliebiger Modelle und/oder Hersteller, die den Anforderungen an die Ladeschussspannung der Energiespeichereinheit 120 entsprechen, eingesetzt werden. Die finale Schluss-Ladung der Energiespeichereinheit 120 kann mit höherer Leistung stattfinden im Vergleich zum Laden mit nur der externen Ladevorrichtung. Das Zuschalten in parallelen Konfigurationen von Batteriebänken wird damit ebenfalls vereinfacht.

Die Steuereinheit 160 ist gemäß Ausführungsformen insbesondere eingerichtet, die Schritte S43 und S44 abwechselnd und/oder wiederholt durchzuführen, was in Figur 10 durch einen Doppelpfeil zwischen den Schritten S43 und S44 veranschaulicht ist. Die Steuereinheit 160 ist eingerichtet, um die vierte Schalteinheit 174 entsprechend der Schritte S43 und S44 wiederholt und abwechselnd zu schließen und zu öffnen, d.h. wiederholt und abwechselnd zu schalten. Die Steuereinheit 160 ist eingerichtet, die vierte Schalteinheit 174 derart wiederholt und abwechselnd zu öffnen und zu schließen, dass ein zeitlicher Mittelwert oder ein Minimalwert der Stromstärke des Ladestroms I und/oder des Stroms I1 über die erste Verbindungsleitung 141 vom ersten Anschluss 111 und zum zweiten Knoten K2 gleich oder größer als ein Booster-Schwellwert ist.

Die Steuereinheit 160 kann insbesondere eingerichtet sein, die vierte Schalteinheit 174 wiederholt und abwechselnd basierend auf einer vorgegebenen Schaltfrequenz und/oder basierend auf einem vorgegebenen Tastverhältnis zu schalten, auch als getaktetes oder periodisches Schalten bezeichnet. Hierdurch kann die Steuereinheit 160 ein Pulsweitenmodulationsverfahren zum Schalten der vierten Schalteinheit 174 durchführen. Dabei gibt eine Öffnungsdauer der vierten Schalteinheit 174 eine Zeitdauer zwischen dem Öffnen und dem Schließen an, also die Zeitdauer, während der die vierte Schalteinheit 174 geöffnet ist. Eine Schließdauer der vierten Schalteinheit 174 gibt eine Zeitdauer zwischen dem Schließen und dem Öffnen an, also die Zeitdauer, während der die vierte Schalteinheit 174 geschlossen ist. Ein Kehrwert der Summe der Öffnungsdauer und der Schließdauer kann als Schaltfrequenz der vierte Schalteinheit 174 definiert sein. Ein Verhältnis zwischen der Schließdauer und der Summe der Öffnungsdauer und der Schließdauer kann als Tastgrad oder Tastverhältnis des Pulsweitenmodulationsverfahrens für die vierte Schalteinheit 174 definiert sein. Hierbei kann ein großes Tastverhältnis einer großen Pulsweite und umgekehrt entsprechen. Eine Pulsweite kann der Schließdauer der vierten Schalteinheit 174 entsprechen. Die Schaltfrequenz kann beispielsweise ungefähr 100 kHz betragen. Die Schaltfrequenz, die Schließdauer, die Öffnungsdauer und/oder das Tastverhältnis können vorgegeben sein. Insbesondere können diese Parameter durch die Steuereinheit 160 vorgegeben oder eingestellt werden und/oder durch die Steuereinheit 160 verändert werden. Die Steuereinheit 160 kann eingerichtet sein, diese Parameter stufenförmig und/oder kontinuierlich zu verändern. Mit Bezug auf das in Figur 10 beschriebene Lade-Steuerverfahren werden die Schaltfrequenz und das Tastverhältnis auch als Lade-Schaltfrequenz bzw. Lade-Tastverhältnis bezeichnet.

Auch kann die Steuereinheit 160 ein Zweipunkt-Regelverfahren bzw. ein Hysterese-Regelverfahren durchführen. Die Steuereinheit 160 kann eingerichtet sein, um die vierte Schalteinheit 174 im dritten Schritt S43 zu schließen, wenn die Stromstärke des Stroms I1 vom ersten Anschluss 111 zum zweiten Knoten K2 oder des Ladestroms I kleiner als ein vorgegebener erster Lade-Schwellwert ist oder diesen Schwellwert überschreitet. Die Steuereinheit 160 kann eingerichtet sein, um die vierte Schalteinheit 174 im vierten Schritt S44 zu öffnen, wenn die Stromstärke gleich oder größer als ein vorgegebener zweiter Lade-Schwellwert ist oder diesen überschreitet. Der zweite Lade-Schwellwert kann dabei gleich oder größer als der erste Lade-Schwellwert sein. Hierbei kann der erste Schwellwert gleich oder kleiner als ein Booster-Schwellwert sein. Entsprechend kann der Minimalwert oder der zeitliche Mittelwert der Stromstärke des Ladestroms I bzw. des Stroms I1 auf dem Booster-Schwellwert aufrechterhalten werden.

Die Steuereinheit 160 kann eingerichtet sein, um den Booster-Schwellwert, die Schließdauer und/oder das Tastverhältnis bzw. den ersten Lade-Schwellwert und/oder den zweiten Lade-Schwellwert während der Durchführung des Lade-Steuerverfahrens bzw. während des Ladevorgangs verringern. Dadurch kann die Wirkung der Spannungserhöhung an der Energiespeichereinheit 120 allmählich verringert werden bzw. kann dadurch der Minimalwert oder der zeitliche Mittelwert der Stromstärke des Ladestroms I allmählich verringert werden. Somit kann die Booster-Wirkung des Lade-Steuerverfahrens bzw. der Voraufladeschaltung 150 mit zunehmenden SOC der Energiespeichereinheit 120 verringert werden.

Der Wert einer maximalen Stromstärke, die die dritte Schalteinheit 173 maximal führen und schalten kann, kann als Stromtragfähigkeit der dritten Schalteinheit 173 bezeichnet werden. Die Stromtragfähigkeit der dritten Schalteinheit 173 kann ungefähr einem Zehntel der Stromtragfähigkeit der ersten Schalteinheit 171 und/oder der zweiten Schalteinheit 172 entsprechen. Gemäß Ausführungsformen kann die Stromtragfähigkeit der dritten Schalteinheit 173 dem Booster-Schwellwert und/oder dem Entladestrom-Schwellwert entsprechen.

Gemäß Ausführungsformen können in einem Energiespeichersystem mit mehreren Energiespeichervorrichtungen gemäß Ausführungsformen der vorliegenden Offenbarung die Steuereinheiten der jeweiligen Energiespeichervorrichtungen miteinander kommunizieren. Wenn für mindestens eine der Energiespeichervorrichtungen gerade das Vorauflade-Steuerverfahren gemäß Ausführungsformen der vorliegenden Offenbarung durchgeführt wird, kann dadurch sichergestellt werden, dass das Lade-Steuerverfahren für die anderen Energiespeichervorrichtungen nicht durchgeführt wird. Dadurch kann insbesondere verhindert werden, dass eine oder mehrere Energiespeichervorrichtungen entladen werden, während gleichzeitig für die anderen Energiespeichervorrichtungen der Boost-Vorgang durchgeführt wird.

Die Voraufladeschaltung gemäß Ausführungsformen der vorliegenden Erfindung kann demnach als Gleichspannungswandler ("DC/DC-Converter"), d.h. sowohl als Abwärtswandler ("Buck Converter") als auch als Aufwärtswandler ("Boost Converter"), verwendet werden und ermöglicht eine Strombegrenzung für Entladeströme der Energiespeichereinheit bzw. Ströme aus der Energiespeichervorrichtung ("forward") insbesondere für eine Voraufladung. Ein Balancing zwischen parallel geschalteten Energiespeichervorrichtungen kann so lange wie nötig durchgeführt werden. Beispielsweise kann die Voraufladeschaltung einen Entladestrom auf 6A und/oder eine abgegebene Leistung von 250W, insbesondere für Lasten ohne eigene Begrenzungsschaltung (sogenannte "dumb loads"), begrenzen. Mit der Voraufladeschaltung können auch Kurzschlüsse erkannt werden. Außerdem wird ermöglicht, dass Solaranlagen Ladeströme zum Laden der Energiespeichereinheit bzw. Ströme in die Energiespeichervorrichtung ("backward") bereitstellen können. Zudem ermöglicht die Voraufladeschaltung, einen 12V-Ausgang ("forward") bereitzustellen (siehe Figur 1), um beispielsweise 12V-Boardsysteme eines Wasserfahrzeugs zu laden. Der 12V-Ausgang kann auch als Eingang für Ströme ("backward) verwendet werden, beispielsweise zum Laden durch Solaranlagen oder für Notfallanwendungen. Die Voraufladeschaltung ermöglicht als Gleichspannungswandler ferner eine Spannungsstabilisierung bei plötzlichen internen Ausschaltbedingungen, beispielsweise bei einem Not-Aus-Signal.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

## Patentansprüche

1. Energiespeichervorrichtung (100, 200) für ein Wasserfahrzeug, die Energiespeichervorrichtung (100, 200) umfassend:
- einen ersten Anschluss (111) und einen zweiten Anschluss (112), eine Energiespeichereinheit (120) mit einem ersten Pol (131) und einem zweiten Pol (132), eine erste Verbindungsleitung (141) zwischen dem ersten Pol (131) und dem ersten Anschluss (111) und eine zweite Verbindungsleitung (142) zwischen dem zweiten Pol (132) und dem zweiten Anschluss (112),
wobei die erste Verbindungsleitung (141) einen ersten Knoten (K1), der mit dem ersten Pol (131) verbunden ist, und einen zweiten Knoten (K2) aufweist, der mit dem ersten Anschluss (111) verbunden ist, und wobei die zweite Verbindungsleitung (142) einen vierten Knoten (K4) aufweist, der mit dem zweiten Pol (132) und dem zweiten Anschluss (112) verbunden ist,
- eine dritte Verbindungsleitung (143) zwischen dem ersten Knoten (K1) und dem zweiten Knoten (K2), mit einem dritten Knoten (K3) und einer Induktivität (L) zwischen dem dritten Knoten (K3) und dem zweiten Knoten (K2), eine vierte Verbindungsleitung (144) zwischen dem dritten Knoten (K3) und dem vierten Knoten (K4) und eine Freilaufdiode (D4) in der vierten Verbindungsleitung (144), die für einen Strom vom vierten Knoten (K4) zum dritten Knoten (K3) in Durchlassrichtung angeordnet ist,
- eine erste Schalteinheit (171) in der ersten Verbindungsleitung (141) zwischen dem ersten Knoten (K1) und dem zweiten Knoten (K2) zum Schalten eines Stroms vom ersten Knoten (K1) zum zweiten Knoten (K2) und eine dritte Schalteinheit (173) in der dritten Verbindungsleitung (143) zwischen dem ersten Knoten (K1) und dem dritten Knoten (K3) zum Schalten eines Stroms vom ersten Knoten (K1) zum dritten Knoten (K3), und
- eine Steuereinheit (160), die eingerichtet ist, die erste Schalteinheit (171) und/oder die dritte Schalteinheit (173) zu steuern, um die Stärke eines Entladestroms (I') für die Energiespeichereinheit (120) auf einen vorgegebenen Entladestrom-Schwellwert zu begrenzen,
**gekennzeichnet dadurch, dass**
die Energiespeichervorrichtung ferner eine vierte Schalteinheit (174) umfasst, die in der vierten Verbindungsleitung (144) zwischen dem dritten Knoten (K3) und dem vierten Knoten (K4) angeordnet und zum Schalten eines Stroms vom dritten Knoten (K3) zum vierten Knoten (K4) eingerichtet ist,
wobei die Steuereinheit (160) eingerichtet ist, um die vierte Schalteinheit (174) derart abwechselnd zu schließen und zu öffnen, dass ein zeitlicher Mittelwert oder ein Minimalwert der Stromstärke des Ladestroms (I) und/oder des Stroms (I1) über die erste Verbindungsleitung (141) zwischen dem ersten Anschluss (111) und dem zweiten Knoten (K2) gleich oder größer als ein vorgegebener Booster-Schwellwert ist.

2. Energiespeichervorrichtung (100, 200) gemäß Anspruch 1, wobei die erste Schalteinheit (171) einen ersten Schalter (S1) und eine zu dem ersten Schalter (S1) parallel verbundene erste Diode (D1) umfasst, die für einen Strom vom ersten Knoten (K1) zum zweiten Knoten (K2) in Sperrrichtung angeordnet ist, und/oder
wobei die dritte Schalteinheit (173) einen dritten Schalter (S3) und eine zum dritten Schalter (S3) parallel verbundene dritte Diode (D3) umfasst, die für einen Strom vom ersten Knoten (K1) zum dritten Knoten (K3) in Sperrrichtung angeordnet ist,

3. Energiespeichervorrichtung (100, 200) gemäß einem der vorstehenden Ansprüche, wobei die erste Schalteinheit (171) und/oder die dritte Schalteinheit (173) als Leistungsschalter oder als Leistungstransistor oder als MOSFET ausgebildet sind, wobei die entsprechende Diode (D1, D3) durch eine parasitäre Diode davon gebildet ist.

4. Energiespeichervorrichtung (100, 200) gemäß einem der vorstehenden Ansprüche, wobei die Steuereinheit (160) eingerichtet ist, um die erste Schalteinheit (171) und/oder die dritte Schalteinheit (173) basierend auf einem Pulsweitenmodulations-Verfahren, einem Zweipunkt-Regelverfahren, einem Hysterese-Regelverfahren und/oder einem linearen Regelverfahren zu schalten, und/oder wobei die Steuereinheit (160) als Begrenzungsregler, vorzugweise als linearer Begrenzungsregler, ausgebildet ist oder diesen umfasst,

5. Energiespeichervorrichtung (100, 200) gemäß einem der vorstehenden Ansprüche, wobei die Steuereinheit (160) eingerichtet ist, um die erste Schalteinheit (171) und/oder die dritte Schalteinheit (173) basierend auf oder in Abhängigkeit von zumindest einem der folgenden zu schalten: eine Richtung und/oder Stärke eines Stroms über die erste Verbindungsleitung (141) zwischen dem ersten Anschluss (111) und dem zweiten Knoten (K2), eine Richtung und/oder Stärke eines Stroms über die dritte Verbindungsleitung (143) zwischen dem dritten Knoten (K3) und dem zweiten Knoten (K2), eine Richtung und/oder Stärke eines Stroms über die erste Verbindungsleitung (141) zwischen dem ersten Knoten (K1) und dem ersten Pol (131), eine Stärke eines Ladestroms (I) für die Energiespeichereinheit (120), eine Stärke des Entladestroms (I') für die Energiespeichereinheit (120), eine Höhe der Spannung der Energiespeichereinheit (120), eine Höhe der Spannung an den Anschlüssen (111, 112), ein Verhältnis zwischen diesen Spannungshöhen.

6. Energiespeichervorrichtung (100, 200) gemäß einem der vorstehenden Ansprüche, wobei die Steuereinheit (171) eingerichtet ist, um die erste Schalteinheit (171) zu schließen, wenn ein Strom (I1) vom ersten Anschluss (111) zum zweiten Knoten (K2) fließt oder wenn ein Ladestrom (I) fließt, und nach Schließen der ersten Schalteinheit (171) die dritte Schalteinheit (173) zu öffnen, und/oder
wobei die Steuereinheit (171) eingerichtet ist, um die dritte Schalteinheit (173) zu öffnen, wenn die Stromstärke eines Entladestroms (I') und/oder eines Stroms (I2) vom dritten Knoten (K3) zum zweiten Knoten (K2) gleich oder größer als ein vorgegebener erster Schwellwert ist oder den ersten Schwellwert überschreitet, und um die dritte Schalteinheit (173) zu schließen, wenn die Stromstärke gleich oder kleiner als ein vorgegebener zweiter Schwellwert ist oder diesen unterschreitet, wobei der zweite Schwellwert gleich oder kleiner als der erste Schwellwert ist, und/oder
wobei die Steuereinheit (160) eingerichtet ist, um die dritte Schalteinheit (173) derart abwechselnd zu öffnen und zu schließen, dass ein zeitlicher Mittelwert oder ein Maximalwert der Stromstärke des Entladestroms (I') und/oder des Stroms (I2) vom dritten Knoten (K3) zum zweiten Knoten (K2) gleich oder kleiner als der Entladestrom-Schwellwert ist.

7. Energiespeichervorrichtung (100, 200) gemäß einem der vorstehenden Ansprüche, wobei die Steuereinheit (160) eingerichtet ist, um die erste Schalteinheit (171) zu schließen und um die dritte Schalteinheit (173) nach Schließen der ersten Schalteinheit zu öffnen, wenn die Stromstärke eines Stroms (I2) vom dritten Knoten (K3) zum zweiten Knoten (K2) und/oder der Entladestrom (I') für die Energiespeichereinheit (120) gleich oder kleiner als vorgegebener dritter Schwellwert ist oder diesen unterschreitet und/oder wenn eine Differenz zwischen einer Spannung (U1) an den Anschlüssen (111, 112) und einer Spannung (U) an der Energiespeichereinheit (120) gleich oder kleiner als ein vorgegebener vierter Schwellwert ist oder diesen unterschreitet.

8. Energiespeichervorrichtung (100, 200) gemäß einem der vorstehenden Ansprüche, ferner umfassend eine zweite Schalteinheit (172), wobei die zweite Schalteinheit (172) in der ersten Verbindungsleitung (141) zwischen dem ersten Knoten (K1) und dem ersten Pol (131) angeordnet und zum Schalten eines Stroms vom ersten Knoten (K1) zum ersten Pol (131) eingerichtet ist, oder
wobei die zweite Schalteinheit (172) in der zweiten Verbindungsleitung (142) zwischen dem zweiten Pol (132) und dem vierten Knoten (K4) angeordnet und zum Schalten eines Stroms vom zweiten Pol (132) zum vierten Knoten (K4) eingerichtet ist,

9. Energiespeichervorrichtung gemäß Anspruch 8, wobei die zweite Schalteinheit (172) einen zweiten Schalter (S2) und eine zum zweiten Schalter (S2) parallel verbundene zweite Diode (D2) umfasst, die für einen Strom vom ersten Knoten (K1) zum ersten Pol (131) in Sperrrichtung angeordnet ist, oder
wobei die zweite Schalteinheit (172) einen zweiten Schalter (S2) und eine zum zweiten Schalter (S2) parallel verbundene zweite Diode (D2) umfasst, die für einen Strom vom zweiten Pol (132) zum vierten Knoten (K4) in Sperrrichtung angeordnet ist.

10. Energiespeichervorrichtung (100, 200) gemäß einem der vorstehenden Ansprüche, wobei die vierte Schalteinheit (174) die Freilaufdiode (D4) umfasst, und/oder wobei die vierte Schalteinheit (174) als Leistungsschalter oder als Leistungstransistor oder als MOSFET ausgebildet ist, wobei die Freilaufdiode (D4) durch eine parasitäre Diode davon gebildet wird.

11. Energiespeichervorrichtung (100, 200) gemäß einem der vorstehenden Ansprüche, wobei die Energiespeichereinheit (120) zumindest eine Batteriezelle ist oder umfasst und/oder wobei die Energiespeichereinheit zumindest ein Batteriemodul mit zumindest einer Batteriezelle ist oder umfasst.

12. Energiespeichersystem (1000) für ein Wasserfahrzeug, umfassend zwei oder mehr Energiespeichervorrichtungen (100, 200) gemäß Anspruch 11, die mittels der ersten und zweiten Anschlüsse (111, 112) in Parallelschaltung miteinander verbunden sind.

13. Lade-Steuerverfahren für eine Energiespeichervorrichtung (100, 200) gemäß einem der Ansprüche 1 bis 11 oder für ein Energiespeichersystem gemäß Anspruch 12, umfassend die Schritte:
- Abwechselndes Schließen der vierten Schalteinheit (174) und Öffnen der vierten Schalteinheit (174),
wobei die vierte Schalteinheit (174) basierend auf einer vorgegebenen Lade-Schaltfrequenz und/oder basierend auf einem vorgegebenen Lade-Tastverhältnis abwechselnd geöffnet und geschlossen wird.

14. Lade-Steuerverfahren für das Energiespeichersystem (1000) gemäß Anspruch 12, umfassend die Schritte:
- gleichzeitiges Durchführen des Lade-Steuerverfahrens gemäß Anspruch 13 für mehrere parallel verbundene Energiespeichervorrichtungen (100, 200) des Energiespeichersystems (1000).

15. Steuereinheit (160), welche dazu eingerichtet ist, das Lade-Steuerverfahren gemäß Anspruch 13 oder 14 durchzuführen.

## Claims

1. An energy storage device (100, 200) for a watercraft, the energy storage device (100, 200) comprising:
- a first terminal (111) and a second terminal (112), an energy storage unit (120) having a first pole (131) and a second pole (132), a first connection line (141) between the first pole (131) and the first terminal (111), and a second connection line (142) between the second pole (132) and the second terminal (112),
wherein the first connection line (141) has a first node (K1) connected to the first pole (131) and a second node (K2) connected to the first terminal (111), and wherein the second connection line (142) has a fourth node (K4) connected to the second pole (132) and the second terminal (112),
- a third connection line (143) between the first node (K1) and the second node (K2), having a third node (K3) and an inductance (L) between the third node (K3) and the second node (K2), a fourth connection line (144) between the third node (K3) and the fourth node (K4), and a freewheeling diode (D4) in the fourth connection line (144) arranged for a current from the fourth node (K4) to the third node (K3) in a forward direction,
- a first switching unit (171) in the first connection line (141) between the first node (K1) and the second node (K2) for switching a current from the first node (K1) to the second node (K2), and a third switching unit (173) in the third connection line (143) between the first node (K1) and the third node (K3) for switching a current from the first node (K1) to the third node (K3), and
- a control unit (160) configured to control the first switching unit (171) and/or the third switching unit (173) to limit the current intensity of a discharge current (I') for the energy storage unit (120) to a predetermined discharge current threshold value,
**characterized in that**
the energy storage device further comprises a fourth switching unit (174) arranged in the fourth connection line (144) between the third node (K3) and the fourth node (K4) and configured to switch a current from the third node (K3) to the fourth node (K4),
wherein the control unit (160) is configured to alternately close and open the fourth switching unit (174) such that a time average value or a minimum value of the current intensity of the charging current (I) and/or of the current (11) via the first connection line (141) between the first terminal (111) and the second node (K2) is equal to or greater than a predetermined booster threshold value.

2. The energy storage device (100, 200) according to claim 1, wherein the first switching unit (171) comprises a first switch (S1) and a first diode (D1) connected in parallel to the first switch (S1) and arranged for a current from the first node (K1) to the second node (K2) in a blocking direction, and/or
wherein the third switching unit (173) comprises a third switch (S3) and a third diode (D3) connected in parallel to the third switch (S3) and arranged for a current from the first node (K1) to the third node (K3) in a blocking direction.

3. The energy storage device (100, 200) according to any one of the preceding claims, wherein the first switching unit (171) and/or the third switching unit (173) are formed as a power switch or as a power transistor or as a MOSFET, wherein the corresponding diode (D1, D3) is formed by a parasitic diode thereof.

4. The energy storage device (100, 200) according to any one of the preceding claims, wherein the control unit (160) is configured to switch the first switching unit (171) and/or the third switching unit (173) based on a pulse width modulation method, a two-point control method, a hysteresis control method and/or a linear control method, and/or wherein the control unit (160) is formed as or comprises a limiting controller, preferably a linear limiting controller.

5. The energy storage device (100, 200) according to any one of the preceding claims, wherein the control unit (160) is configured to switch the first switching unit (171) and/or the third switching unit (173) based on or depending on at least one of the following: a direction and/or intensity of a current via the first connection line (141) between the first terminal (111) and the second node (K2), a direction and/or intensity of a current via the third connection line (143) between the third node (K3) and the second node (K2), a direction and/or intensity of a current via the first connection line (141) between the first node (K1) and the first pole (131), a current intensity of a charging current (I) for the energy storage unit (120), a current intensity of the discharge current (I') for the energy storage unit (120), a level of the voltage of the energy storage unit (120), a level of the voltage at the terminals (111, 112), a ratio between these voltage levels.

6. The energy storage device (100, 200) according to any one of the preceding claims, wherein the control unit (160) is configured to close the first switching unit (171) when a current (11) flows from the first terminal (111) to the second node (K2) or when a charging current (I) flows, and to open the third switching unit (173) after closing the first switching unit (171), and/or
wherein the control unit (160) is configured to open the third switching unit (173) when the current intensity of a discharge current (I') and/or of a current (I2) from the third node (K3) to the second node (K2) is equal to or greater than a predetermined first threshold value or exceeds the first threshold value, and to close the third switching unit (173) when the current intensity is equal to or less than or falls below a predetermined second threshold value, wherein the second threshold value is equal to or less than the first threshold value, and/or
wherein the control unit (160) is configured to alternately open and close the third switching unit (173) such that a time average value or a maximum value of the current intensity of the discharge current (I') and/or of the current (I2) from the third node (K3) to the second node (K2) is equal to or less than the discharge current threshold value.

7. The energy storage device (100, 200) according to any one of the preceding claims, wherein the control unit (160) is configured to close the first switching unit (171) and to open the third switching unit (173) after closing the first switching unit when the current intensity of a current (I2) from the third node (K3) to the second node (K2) and/or the discharge current (I') for the energy storage unit (120) is equal to or less than or falls below a predetermined third threshold value and/or when a difference between a voltage (U1) at the terminals (111, 112) and a voltage (U) at the energy storage unit (120) is equal to or less than or falls below a predetermined fourth threshold value.

8. The energy storage device (100, 200) according to any one of the preceding claims, further comprising a second switching unit (172), wherein the second switching unit (172) is arranged in the first connection line (141) between the first node (K1) and the first pole (131) and configured to switch a current from the first node (K1) to the first pole (131), or
wherein the second switching unit (172) is arranged in the second connection line (142) between the second pole (132) and the fourth node (K4) and configured to switch a current from the second pole (132) to the fourth node (K4).

9. The energy storage device according to claim 8, wherein the second switching unit (172) comprises a second switch (S2) and a second diode (D2) connected in parallel to the second switch (S2) and arranged for a current from the first node (K1) to the first pole (131) in a blocking direction, or
wherein the second switching unit (172) comprises a second switch (S2) and a second diode (D2) connected in parallel to the second switch (S2) and arranged for a current from the second pole (132) to the fourth node (K4) in a blocking direction.

10. The energy storage device (100, 200) according to any one of the preceding claims, wherein the fourth switching unit (174) comprises the freewheeling diode (D4), and/or wherein the fourth switching unit (174) is formed as a power switch or as a power transistor or as a MOSFET, wherein the freewheeling diode (D4) is formed by a parasitic diode thereof.

11. The energy storage device (100, 200) according to any one of the preceding claims, wherein the energy storage unit (120) is or comprises at least one battery cell, and/or wherein the energy storage unit is or comprises at least one battery module with at least one battery cell.

12. An energy storage system (1000) for a watercraft, comprising two or more energy storage devices (100, 200) according to claim 11, which are connected to each other in parallel by means of the first and second terminals (111, 112).

13. A charging control method for an energy storage device (100, 200) according to any one of claims 1 to 11 or for an energy storage system according to claim 12, comprising the steps of:
- alternately closing the fourth switching unit (174) and opening the fourth switching unit (174),
wherein the fourth switching unit (174) is alternately opened and closed based on a predetermined charging switching frequency and/or based on a predetermined charging duty cycle.

14. A charging control method for the energy storage system (1000) according to claim 12, comprising the steps of:
- simultaneously performing the charging control method according to claim 13 for a plurality of energy storage devices (100, 200) of the energy storage system (1000) connected in parallel.

15. A control unit (160) configured to perform the charging control method according to claim 13 or 14.

## Revendications

1. Dispositif de stockage d'énergie (100, 200) pour un navire, le dispositif de stockage d'énergie (100, 200) comprenant:
- une première borne (111) et une deuxième borne (112), une unité de stockage d'énergie (120) ayant un premier pôle (131) et un deuxième pôle (132), une première ligne de connexion (141) entre le premier pôle (131) et la première borne (111) et une deuxième ligne de connexion (142) entre le deuxième pôle (132) et la deuxième borne (112),
dans lequel la première ligne de connexion (141) a un premier noeud (K1) connecté au premier pôle (131) et un deuxième noeud (K2) connecté à la première borne (111), et dans lequel la deuxième ligne de connexion (142) a un quatrième noeud (K4) connecté au deuxième pôle (132) et à la deuxième borne (112),
- une troisième ligne de connexion (143) entre le premier noeud (K1) et le deuxième noeud (K2), ayant un troisième noeud (K3) et une inductance (L) entre le troisième noeud (K3) et le deuxième noeud (K2), une quatrième ligne de connexion (144) entre le troisième noeud (K3) et le quatrième noeud (K4), et une diode de roue libre (D4) dans la quatrième ligne de connexion (144) qui est agencée pour un courant du quatrième noeud (K4) au troisième noeud (K3) dans une direction directe,
- une première unité de commutation (171) dans la première ligne de connexion (141) entre le premier noeud (K1) et le deuxième noeud (K2) pour commuter un courant du premier noeud (K1) au deuxième noeud (K2) et une troisième unité de commutation (173) dans la troisième ligne de connexion (143) entre le premier noeud (K1) et le troisième noeud (K3) pour commuter un courant du premier noeud (K1) au troisième noeud (K3), et
- une unité de commande (160) qui est configurée pour commander la première unité de commutation (171) et/ou la troisième unité de commutation (173) pour limiter l'intensité d'un courant de décharge (I') pour l'unité de stockage d'énergie (120) à une valeur de seuil de courant de décharge prédéterminée,
**caractérisé en ce que**
le dispositif de stockage d'énergie comprend en outre une quatrième unité de commutation (174) qui est agencée dans la quatrième ligne de connexion (144) entre le troisième noeud (K3) et le quatrième noeud (K4) et est configurée pour commuter un courant du troisième noeud (K3) au quatrième noeud (K4),
dans lequel l'unité de commande (160) est configurée pour fermer et ouvrir en alternance la quatrième unité de commutation (174) de sorte qu'une valeur moyenne temporelle ou une valeur minimale de l'intensité du courant de charge (I) et/ou du courant (I1) par l'intermédiaire de la première ligne de connexion (141) entre la première borne (111) et le deuxième noeud (K2) est égale ou supérieure à une valeur de seuil d'amplification prédéterminée.

2. Dispositif de stockage d'énergie (100, 200) selon la revendication 1, dans lequel la première unité de commutation (171) comprend un premier commutateur (S1) et une première diode (D1) connectée en parallèle au premier commutateur (S1) qui est agencée pour un courant du premier noeud (K1) au deuxième noeud (K2) dans une direction inverse, et/ou
dans lequel la troisième unité de commutation (173) comprend un troisième commutateur (S3) et une troisième diode (D3) connectée en parallèle au troisième commutateur (S3) qui est agencée pour un courant du premier noeud (K1) au troisième noeud (K3) dans une direction inverse.

3. Dispositif de stockage d'énergie (100, 200) selon l'une quelconque des revendications précédentes, dans lequel la première unité de commutation (171) et/ou la troisième unité de commutation (173) sont réalisées sous forme de commutateur de puissance ou sous forme de transistor de puissance ou sous forme de MOSFET, dans lequel la diode correspondante (D1, D3) est formée par une diode parasite de celui-ci.

4. Dispositif de stockage d'énergie (100, 200) selon l'une quelconque des revendications précédentes, dans lequel l'unité de commande (160) est configurée pour commuter la première unité de commutation (171) et/ou la troisième unité de commutation (173) sur la base d'un procédé de modulation de largeur d'impulsion, d'un procédé de régulation à deux points, d'un procédé de régulation à hystérésis et/ou d'un procédé de régulation linéaire, et/ou dans lequel l'unité de commande (160) est réalisée sous forme de régulateur de limitation, de préférence sous forme de régulateur de limitation linéaire, ou comprend celui-ci.

5. Dispositif de stockage d'énergie (100, 200) selon l'une quelconque des revendications précédentes, dans lequel l'unité de commande (160) est configurée pour commuter la première unité de commutation (171) et/ou la troisième unité de commutation (173) sur la base ou en fonction d'au moins l'un des éléments suivants : une direction et/ou une intensité d'un courant par l'intermédiaire de la première ligne de connexion (141) entre la première borne (111) et le deuxième noeud (K2), une direction et/ou une intensité d'un courant par l'intermédiaire de la troisième ligne de connexion (143) entre le troisième noeud (K3) et le deuxième noeud (K2), une direction et/ou une intensité d'un courant par l'intermédiaire de la première ligne de connexion (141) entre le premier noeud (K1) et le premier pôle (131), une intensité d'un courant de charge (I) pour l'unité de stockage d'énergie (120), une intensité du courant de décharge (I') pour l'unité de stockage d'énergie (120), un niveau de la tension de l'unité de stockage d'énergie (120), un niveau de la tension aux bornes (111, 112), un rapport entre ces niveaux de tension.

6. Dispositif de stockage d'énergie (100, 200) selon l'une quelconque des revendications précédentes, dans lequel l'unité de commande (160) est configurée pour fermer la première unité de commutation (171) lorsqu'un courant (I1) circule de la première borne (111) au deuxième noeud (K2) ou lorsqu'un courant de charge (I) circule, et pour ouvrir la troisième unité de commutation (173) après la fermeture de la première unité de commutation (171), et/ou
dans lequel l'unité de commande (160) est configurée pour ouvrir la troisième unité de commutation (173) lorsque l'intensité d'un courant de décharge (I') et/ou d'un courant (I2) du troisième noeud (K3) au deuxième noeud (K2) est égale ou supérieure à une première valeur de seuil prédéterminée ou dépasse la première valeur de seuil, et pour fermer la troisième unité de commutation (173) lorsque l'intensité est égale ou inférieure à une deuxième valeur de seuil prédéterminée ou est inférieure à celle-ci, dans lequel la deuxième valeur de seuil est égale ou inférieure à la première valeur de seuil, et/ou
dans lequel l'unité de commande (160) est configurée pour ouvrir et fermer en alternance la troisième unité de commutation (173) de sorte qu'une valeur moyenne temporelle ou une valeur maximale de l'intensité du courant de décharge (I') et/ou du courant (I2) du troisième noeud (K3) au deuxième noeud (K2) est égale ou inférieure à la valeur de seuil de courant de décharge.

7. Dispositif de stockage d'énergie (100, 200) selon l'une quelconque des revendications précédentes, dans lequel l'unité de commande (160) est configurée pour fermer la première unité de commutation (171) et pour ouvrir la troisième unité de commutation (173) après la fermeture de la première unité de commutation lorsque l'intensité d'un courant (I2) du troisième noeud (K3) au deuxième noeud (K2) et/ou le courant de décharge (I') pour l'unité de stockage d'énergie (120) est égal ou inférieur à une troisième valeur de seuil prédéterminée ou est inférieur à celle-ci et/ou lorsqu'une différence entre une tension (U1) aux bornes (111, 112) et une tension (U) à l'unité de stockage d'énergie (120) est égale ou inférieure à une quatrième valeur de seuil prédéterminée ou est inférieure à celle-ci.

8. Dispositif de stockage d'énergie (100, 200) selon l'une quelconque des revendications précédentes, comprenant en outre une deuxième unité de commutation (172), dans lequel la deuxième unité de commutation (172) est agencée dans la première ligne de connexion (141) entre le premier noeud (K1) et le premier pôle (131) et est configurée pour commuter un courant du premier noeud (K1) au premier pôle (131), ou dans lequel la deuxième unité de commutation (172) est agencée dans la deuxième ligne de connexion (142) entre le deuxième pôle (132) et le quatrième noeud (K4) et est configurée pour commuter un courant du deuxième pôle (132) au quatrième noeud (K4).

9. Dispositif de stockage d'énergie selon la revendication 8, dans lequel la deuxième unité de commutation (172) comprend un deuxième commutateur (S2) et une deuxième diode (D2) connectée en parallèle au deuxième commutateur (S2) qui est agencée pour un courant du premier noeud (K1) au premier pôle (131) dans une direction inverse, ou
dans lequel la deuxième unité de commutation (172) comprend un deuxième commutateur (S2) et une deuxième diode (D2) connectée en parallèle au deuxième commutateur (S2) qui est agencée pour un courant du deuxième pôle (132) au quatrième noeud (K4) dans une direction inverse.

10. Dispositif de stockage d'énergie (100, 200) selon l'une quelconque des revendications précédentes, dans lequel la quatrième unité de commutation (174) comprend la diode de roue libre (D4), et/ou dans lequel la quatrième unité de commutation (174) est réalisée sous forme de commutateur de puissance ou sous forme de transistor de puissance ou sous forme de MOSFET, dans lequel la diode de roue libre (D4) est formée par une diode parasite de celui-ci.

11. Dispositif de stockage d'énergie (100, 200) selon l'une quelconque des revendications précédentes, dans lequel l'unité de stockage d'énergie (120) est ou comprend au moins une cellule de batterie et/ou dans lequel l'unité de stockage d'énergie est ou comprend au moins un module de batterie avec au moins une cellule de batterie.

12. Système de stockage d'énergie (1000) pour un navire, comprenant deux dispositifs de stockage d'énergie (100, 200) ou plus selon la revendication 11, qui sont connectés l'un à l'autre en connexion parallèle au moyen des première et deuxième bornes (111, 112).

13. Procédé de commande de charge pour un dispositif de stockage d'énergie (100, 200) selon l'une quelconque des revendications 1 à 11 ou pour un système de stockage d'énergie selon la revendication 12, comprenant les étapes suivantes:
- fermer en alternance la quatrième unité de commutation (174) et ouvrir la quatrième unité de commutation (174),
dans lequel la quatrième unité de commutation (174) est ouverte et fermée en alternance sur la base d'une fréquence de commutation de charge prédéterminée et/ou sur la base d'un rapport cyclique de charge prédéterminé.

14. Procédé de commande de charge pour le système de stockage d'énergie (1000) selon la revendication 12, comprenant les étapes suivantes:
- réaliser simultanément le procédé de commande de charge selon la revendication 13 pour plusieurs dispositifs de stockage d'énergie (100, 200) connectés en parallèle du système de stockage d'énergie (1000).

15. Unité de commande (160) qui est configurée pour réaliser le procédé de commande de charge selon la revendication 13 ou 14.
